# EUROPEAN PATENT APPLICATION

(11) **EP 4 850 942 A1**
(43) Date of publication of application: **09.12.2026**
(21) Application number: 25748009.5
(22) Date of filing: 27.01.2025
(51) Int. Cl.: B60K 1/00

(54) **POWERTRAIN, VEHICLE CONTROLLER AND VEHICLE**

(30) Priority: 31.01.2024 CN 202410142392; 31.01.2024 CN 202420243529 U; 31.01.2024 CN 202420247663 U; 31.01.2024 CN 202420247528 U
(71) Applicant: Geely Automobile Research Institute (Ningbo) Co., Ltd., Ningbo, Zhejiang 315336 (CN); Zhejiang Geely Holding Group Co., Ltd., Hangzhou, Zhejiang 310051 (CN)
(72) Inventor: LIU, Ming, Hangzhou Bay New District Ningbo, Zhejiang 315336 (CN); DUO, Yonghong, Hangzhou Bay New District Ningbo, Zhejiang 315336 (CN)
(74) Representative: Boult Wade Tennant LLP
(86) International application number: PCT/CN2025/075492
(87) International publication number: WO 2025/162447

(57) **Abstract**

The present application provides a powertrain, a vehicle controller and a vehicle, relating to the technical field of vehicles. The powertrain includes a motor, a reducer and a controller; the controller includes a controller housing, and a first control module and a second control module that are arranged within the controller housing; the first control module includes a vehicle control unit, a motor control unit, a high voltage battery management unit and a low voltage battery management unit; the second control module includes a charging control unit; the controller housing is provided with a first opening and a second opening, and the controller housing is further provided with a first cover and a second cover, the first cover is configured to openably cover the first opening, and the second cover is configured to openably cover the second opening, where the first opening is opposite to the first control module, and the second opening is opposite to the second control module. The present application enables safe and convenient maintenance of components such as the on-board charger without colliding or damaging other electrical components.

## Description

This application claims priority to Chinese Patent Application No. 202410142392.9, filed with the China National Intellectual Property Administration on January 31, 2024, and titled "POWERTRAIN AND VEHICLE"; Chinese Patent Application No. 202420243529.5, filed with the China National Intellectual Property Administration on January 31, 2024, and titled "ON-BOARD CHARGER, VEHICLE CONTROLLER AND VEHICLE"; Chinese Patent Application No. 202420247663.2, filed with the China National Intellectual Property Administration on January 31, 2024, and titled "ELECTRIC CONTROL ASSEMBLY AND VEHICLE"; Chinese patent application No. 202420247528.8, filed with the China National Intellectual Property Administration on January 31, 2024, and titled "ELECTRIC DRIVE ASSEMBLY AND VEHICLE". All of the afore-mentioned applications are hereby incorporated by reference in their entireties.

### TECHNICAL FIELD

The present application relates to the technical field of vehicles, in particular, to a powertrain, vehicle controller and vehicle.

### BACKGROUND

With the depletion of global oil resources, new energy vehicles have been greatly developed due to their advantages such as low pollution emissions, low noise generated by drive systems and low energy consumption.

A powertrain of a new energy vehicle typically includes a motor, a reducer and a controller. The main function of the controller is to convert a direct current from a power battery in the new energy vehicle into a three-phase alternating current for use by the motor. Electrical components such as an on-board charger, a direct current-direct current converter, and a battery management system are typically integrated within a controller housing to enhance the integration level of the powertrain.

However, due to the large number of electrical components in the controller, when inspecting and repairing some (e.g., the on-board charger) of the electrical components, it is easy to collide and damage other electrical components, resulting in low safety.

### SUMMARY

In view of the above problems, the present application provides a powertrain, a vehicle controller and a vehicle, which allow safe and convenient inspection and repair of components such as an on-board charger without colliding or damaging other electrical components.

To achieve the above objects, the present application provides the following technical solutions.

In a first aspect, an embodiment of the present application provides a powertrain, including a motor, a reducer and a controller, where the motor and the reducer are each electrically connected to the controller;
the controller includes a controller housing, and a first control module and a second control module that are arranged within the controller housing; the first control module includes a vehicle control unit, a motor control unit, a high voltage battery management unit and a low voltage battery management unit; the second control module includes a charging control unit;
the controller housing is provided with a first opening and a second opening, and the controller housing is further provided with a first cover and a second cover, the first cover is configured to openably cover the first opening, and the second cover is configured to openably cover the second opening, where the first opening is opposite to the first control module, and the second opening is opposite to the second control module.

In some embodiments of the present application, the first opening and the second opening are located on two opposite side walls of the controller housing, respectively.

In some embodiments of the present application, the controller housing is provided with a partition plate, the partition plate is configured to divide an inner cavity of the controller housing into two parts, and the first control module and the second control module are respectively located in cavities at both sides of the partition plate.

In some embodiments of the present application, the motor includes a motor housing and a motor body disposed within the motor housing;
the reducer includes a reducer housing and a gear assembly disposed within the reducer housing, the reducer housing is connected to the motor housing, the gear assembly is connected to an output shaft of the motor body, the gear assembly include a plurality of gears, the plurality of gears are arranged along a first direction, the first direction is perpendicular to the output shaft of the motor body, the motor housing and the reducer housing form an included angle area;
the controller is located on a side of the motor housing along a circumferential direction of the output shaft of the motor body, and at least one of the motor housing and the reducer housing is connected to the controller housing.

In some embodiments of the present application, at least part of the controller housing protrudes into the included angle area, so that the second control module and the second cover are both within the included angle area.

In some embodiments of the present application, the powertrain further includes a cooling unit, the cooling unit has a cooling pipeline for flow of a cooling fluid;
the cooling pipeline includes a first cooling section and a second cooling section, the first cooling section is configured for heat exchange with the first control module, the second cooling section is configured for heat exchange with the second control module, where the first cooling section is in communication with the second cooling section.

In some embodiments of the present application, the reducer housing is provided with a first through hole and a second through hole, both the first through hole and the second through hole are in communication with inner and outer sides of the reducer housing, and both the first through hole and the second through hole are in communication with an inner cavity of the motor housing; a height of the first through hole is greater than a height of the second through hole.

In some embodiments of the present application, the powertrain further includes an oil pump and a heat exchanger, the heat exchanger includes a first chamber and a second chamber that are separated from each other, one end of the oil pump is in communication with the inner cavity of the motor housing, the other end of the oil pump is in communication with a first end of the first chamber, a second end of the first chamber is in communication with the reducer housing and the motor housing, respectively; the second chamber is in communication with the cooling pipeline.

In some embodiments of the present application, the charging control unit includes an on-board charger and a direct current-direct current converter.

In a second aspect, an embodiment of the present application provides a vehicle, which includes the powertrain according to the first aspect.

Compared with the prior art, the powertrain and the vehicle provided by the embodiments of the present application have the following advantages:
The powertrain includes a motor, a reducer and a controller, where the motor and the reducer are each electrically connected to the controller, so that the operation of the motor and the reducer is controlled by the controller separately. The electrical components in the controller are divided into two parts, namely a first control module and a second control module. The first control module is opposite to a first opening, with a first cover mounted on the first opening, and the second control module is opposite to a second opening, with a second cover mounted on the second opening. In this way, when overhauling the first control module, it is only necessary to open the first cover, and the second control module can be protected by the second cover; when overhauling the second control module, it is only necessary to open the second cover, and the first control module can be protected by the first cover, resulting in high safety.

In a third aspect, the present application provides an on-board charger, applied in a vehicle controller and including a base plate and a charger body;
the charger body is located on the base plate and is detachably connected to the base plate;
the base plate includes mounting holes, the mounting holes are used to connect to the vehicle controller, so that the on-board charger is detachably connected to the vehicle controller via the mounting holes.

In the present application, the on-board charger is configured to include the base plate and detachably connected to the vehicle controller via the base plate. This obviates the need for providing a housing for the on-board charger, and only the base plate is required for connection with the housing of the vehicle controller. Consequently, structures such as an upper end cover and side walls of the lower housing of the on-board charger can be omitted, which effectively reduces the structural size and weight of the on-board charger, thereby achieving an effective lightweight design of the on-board charger and significantly cutting down the material cost of the on-board charger.

In a feasible embodiment, a cooling pipeline is further included, the cooling pipeline is located on the base plate and connected to the base plate;
the cooling pipeline contains a coolant, and the charger body is distributed around the cooling pipeline.

In a feasible embodiment, the cooling pipeline encloses to form a first accommodating groove;
the first accommodating groove contains a first thermal conductive adhesive therein, and at least part of the charger body is embedded in the first thermal conductive adhesive.

In a feasible embodiment, a first barrier is further included, the first barrier is located on the base plate;
the first barrier encloses to form a second accommodating groove, the second accommodating groove contains a second thermal conductive adhesive therein, and at least part of one end of the charger body extends into the second thermal conductive adhesive.

In a feasible embodiment, a second barrier is further included, the second barrier is located on the base plate, and the cooling pipeline is located between the second barrier and the first barrier;
the second barrier encloses to form a third accommodating groove, the third accommodating groove contains a third thermal conductive adhesive, and at least part of one end of the charger body extends into the third thermal conductive adhesive.

In a feasible embodiment, a plurality of first connecting columns is further included, the plurality of first connecting columns are distributed on both sides of the first accommodating groove, and the first connecting columns are located at an edge of the base plate;
the first connecting columns are provided with first connecting holes, and the charger body is connected to the first connecting columns through the first connecting holes.

In a feasible embodiment, a second connecting column is further included, the second connecting column is provided around an outer periphery of the cooling pipeline and connected to the cooling pipeline;
the second connecting column is provided with a second connecting hole, and the charger body is connected to the second connecting column through the second connecting hole.

In a feasible embodiment, an inlet and an outlet is further included;
the inlet and the outlet are located on a side of the base plate facing away from the cooling pipeline, and the inlet and outlet are in communication with the cooling pipeline.

In a fourth aspect, the present application provides a vehicle controller, including a housing and the on-board charger according to any one of the aforementioned embodiments;
the on-board charger is located inside the housing and detachably connected to a bottom wall of the housing.

In a fifth aspect, the present application provides a vehicle, including the aforementioned vehicle controller.

In a sixth aspect, the present application provides an electric control assembly applied in an electric drive system, including a housing assembly, a control assembly and a cooling assembly;
the housing assembly includes a first housing and a second housing, the first housing is configured to connect with a motor and a reducer of the electric drive system, and the second housing is connected below part of the first housing;
the control assembly includes a first control unit and a second control unit, the first control unit is disposed within the first housing, and the second control unit is disposed within the second housing;
the cooling assembly includes a first cooling unit and a second cooling unit, the first cooling unit is disposed between the first housing and the second housing, the second cooling unit is disposed on the motor, and the first cooling unit is in communication with the second cooling unit to cool the control assembly, the motor, and the reducer.

In some technical solutions of the electric control assembly, the first housing includes a first enclosure portion, a first base plate and a second base plate, the first base plate is connected to the second base plate, the first enclosure portion is arranged around the first base plate and the second base plate, and the second housing is located below the first base plate.

In some technical solutions of the electric control assembly, the second housing includes a second enclosure portion and a plug-in portion, the second enclosure portion is arranged around a lower side of the first base plate facing away from the first enclosure portion, and the plug-in portion is plugged onto the second enclosure portion.

In some technical solutions of the electric control assembly, the first cooling unit includes a first cooling member, the first cooling member is disposed on the first base plate and has a cooling water channel inlet and a cooling water channel outlet that are in communication with each other.

In some technical solutions of the electric control assembly, the first cooling unit further includes at least one liquid inlet and at least one liquid outlet, the liquid inlet is disposed on a side of the first enclosure portion facing the first base plate, and the liquid outlet is disposed on a side of the second base plate; the liquid inlet is in communication with the cooling water channel inlet, and the liquid outlet is in communication with the cooling water channel outlet.

In some technical solutions of the electric control assembly, the second cooling unit includes a second cooling member and a connecting member, the second cooling member is configured to be disposed at a bottom end of a motor housing, and the second cooling member is in communication with the liquid outlet via the connecting member.

In some technical solutions of the electric control assembly, the first control unit includes a motor controller, and the motor controller is provided in the first housing.

In some technical solutions of the electric control assembly, the second control unit includes an on-board charger and a direct current-direct current converter, the on-board charger and the direct current-direct current converter are provided on a side of the first base plate facing the plug-in portion.

In some technical solutions of the electric control assembly, the first housing further includes a top plate, the top plate is covered on the first enclosure portion, and a mounting seat is provided on the first enclosure portion, the mounting seat is arranged in a one-to-one correspondence with mounting holes on the motor and the reducer, so that the mounting seat is connected to the mounting holes via fasteners.

In a seventh aspect, the present application provides a vehicle, including an electric drive system and the electric control assembly according to any one of the aforementioned embodiments connected to the electric drive system.

The present application provides an electric control assembly and a vehicle. The electric control assembly includes a first housing and a second housing, where the first housing is configured to accommodate a first control unit of a control assembly, and the second housing is configured to accommodate a second control unit of the control assembly. By connecting the second housing to the lower part of a portion of the first housing, the lower part of the first housing is stepped, so that the stacking height is reduced when components such as a motor of the electric drive system are connected to the first housing. A first cooling unit and a second cooling unit are provided, the control assembly shares the first cooling unit for heat dissipation, and the second cooling unit is configured for cooling the motor and the reducer. The first cooling unit is in communication with the second cooling unit, so that the electric control assembly, the motor and the reducer have a series cooling channel, resulting in a simple layout of the cooling assembly with a small space occupation. Thus, the present application increases the space utilization rate of the electric control assembly and improves the integration level of the electric control assembly with the electric drive system by optimizing the layout of the housing assembly and the cooling assembly.

In an eighth aspect, the present application provides an electric drive assembly, including a power module and a motor control module, where the motor control module includes a housing, a first electrical assembly and a second electrical assembly; the housing and the power module are sequentially connected in a first direction, and the housing has a first accommodating cavity and a second accommodating cavity that are in communication with each other, the first accommodating cavity and the second accommodating cavity are arranged in a stacked manner along the first direction; the first electrical assembly is disposed in the first accommodating cavity, and the first electrical assembly includes a main control board and a drive board, the main control board is provided with a vehicle control unit, a motor control unit, a high-voltage battery management unit and a low-voltage battery management unit; the second electrical assembly is disposed in the second accommodating cavity, the second electrical assembly includes a charging control unit, and the second electrical assembly is connected to the first electrical assembly via a plug-in wiring harness.

As for the above electric drive assembly, optionally, the housing includes a first housing and a second housing, where the first housing is connected to the power module, and the second housing and the first housing are integrally formed, the first accommodating cavity is provided in the first housing, and the second accommodating cavity is provided in the second housing.

As for the above electric drive assembly, optionally, an opening is formed at a lower part of the first accommodating cavity, and the second housing is disposed in the first accommodating cavity through the opening.

As for the above electric drive assembly, optionally, a fast charging interface and a slow charging interface are provided on the housing, the fast charging interface is configured for connecting to a high-voltage battery, and the slow charging interface is electrically connected to the charging control unit.

As for the above vehicle body structure, optionally, the charging control unit includes an on-board charger and a direct current-direct current converter, the slow charging interface is connected to the on-board charger, and the on-board charger is configured to charge the power battery.

As for the above electric drive assembly, optionally, the first housing and the second housing are each provided with a plug-in interface, where the plug-in interface is a threaded connection interface or a quick connection interface.

As for the above electric drive assembly, optionally, the electric drive assembly further includes a liquid cooling assembly, the liquid cooling assembly is disposed on the housing and has a liquid cooling pipeline and a pipe, the drive board is thermally connected to the liquid cooling pipeline, so that the liquid cooling pipeline dissipates heat for the drive board.

As for the above electric drive assembly, optionally, the power module includes a drive motor, a drive motor housing, a reducer and a reducer housing, where the drive motor and the reducer are respectively mounted on the reducer housing, an output shaft of the drive motor is connected to the reducer, and the housing is arranged on the reducer housing.

As for the above electric drive assembly, optionally, a bracket is provided on the housing, a mounting portion is provided on the reducer housing, and the mounting portion is connected to the bracket.

In a ninth aspect, the present application provides a vehicle, including the aforementioned electric drive assembly.

The present application provides an electric drive assembly and a vehicle. The electric drive assembly includes a power module and a motor control module, where the motor control module includes a housing, a first electrical assembly and a second electrical assembly. The housing and the power module are sequentially connected in a first direction, and the housing has a first accommodating cavity and a second accommodating cavity that are in communication with each other. The first accommodating cavity and the second accommodating cavity are arranged in a stacked manner along the first direction. The first electrical assembly is disposed in the first accommodating cavity and includes a main control board, on which a vehicle control unit, a motor control unit, a high-voltage battery management unit and a low-voltage battery management unit are arranged. The second electrical assembly is disposed in the second accommodating cavity and includes a charging control unit, and the second electrical assembly is connected to the first electrical assembly via a plug-in wiring harness. The electric drive assembly and the vehicle provided by the present application have a high integration level and the motor controller has a fast internal communication speed.

In addition to the technical problems solved, the technical features constituting the technical solutions, and the beneficial effects brought about by the technical features of the technical solutions in the embodiments of the present application as described above, other technical problems that can be solved by the powertrain, vehicle controller and vehicle provided by the embodiments of the present application, other technical features included in the technical solutions, and the beneficial effects brought about by these technical features will be described in further detail in the description of the embodiments.

### BRIEF DESCRIPTION OF DRAWINGS

In order to illustrate the technical solutions of embodiments of the present application or the prior art more clearly, the drawings needed to be used in the embodiments of the present application or the prior art will be briefly introduced below. Obviously, the drawings in the following description are merely some embodiments of the present application, and for those skilled in the art, other drawings can be obtained according to these drawings without paying creative effort.
FIG. 1 is a schematic structural diagram of a powertrain provided by an embodiment of the present application.
FIG. 2 is another schematic structural diagram of a powertrain provided by an embodiment of the present application.
FIG. 3 is another schematic structural diagram of a powertrain provided by an embodiment of the present application.
FIG. 4 is another schematic structural diagram of a powertrain provided by an embodiment of the present application.
FIG. 5 is an exploded schematic diagram of a powertrain provided by an embodiment of the present application.
FIG. 6 is an exploded schematic diagram of a controller provided by an embodiment of the present application.
FIG. 7 is a schematic structural diagram of an on-board charger provided by an embodiment of the present application.
FIG. 8 is a schematic structural diagram of a vehicle controller provided by an embodiment of the present application.
FIG. 9 is a schematic structural diagram of an on-board charger provided in a vehicle controller provided by an embodiment of the present application.
FIG. 10 is a schematic structural diagram of an on-board charger with a charger body removed provided by an embodiment of the present application.
FIG. 11 is a schematic structural diagram of an on-board charger from another perspective provided by an embodiment of the present application.
FIG. 12 is a schematic structural diagram of a partial structure of a vehicle provided by an embodiment of the present application.
FIG. 13 is a left-viewed schematic structural diagram of FIG. 12.
FIG. 14 is a front-viewed schematic structural diagram of FIG. 12.
FIG. 15 is an exploded schematic diagram of a connection between a housing assembly of an electric control assembly and an electric drive system in FIG. 12.
FIG. 16 is an exploded schematic diagram of a connection between a first housing and a second housing of an electric control assembly in FIG. 12.
FIG. 17 is a schematic structural diagram of the first housing of the electric control assembly in FIG 16.
FIG. 18 is a schematic structural diagram of a cooling assembly of an electric control assembly in FIG. 12.
FIG. 19 is a schematic structural diagram of a second control unit in FIG. 16.
FIG. 20 is a schematic structural diagram of an electric drive assembly provided by an embodiment of the present application.
FIG. 21 is a schematic structural diagram of an electric drive assembly from one perspective provided by an embodiment of the present application.
FIG. 22 is a schematic structural diagram of an electric drive assembly from another perspective provided by an embodiment of the present application.
FIG. 23 is an exploded schematic diagram of an electric drive assembly provided by an embodiment of the present application.
FIG. 24 is a schematic structural diagram of a motor control module of an electric drive assembly provided by an embodiment of the present application.
FIG. 25 is a schematic diagram of a motor control module of an electric drive assembly provided by an embodiment of the present application.

### DESCRIPTION OF EMBODIMENTS

In order to make the above-mentioned purposes, features and advantages of the embodiments of the present application more obvious and understandable, the technical solutions of the embodiments of the present application will be described clearly and completely in conjunction with the drawings in the embodiments of the present application. Obviously, the embodiments described are only some embodiments of the present application, not all embodiments. All other embodiments obtained by those skilled in the art without paying creative effort based on the embodiments of the present application fall within the scope of protection of the present application.

### Embodiment 1

As described in the background technology, in the relevant technology, an on-board charger, a battery management system, a motor control unit, a vehicle controller and other electrical components in a controller are integrated within a housing of the controller, resulting in a high degree of integration and small size of the controller, and thus a high degree of integration of a powertrain. However, this can also lead to the risk of collision with and damage to other electrical components when repairing or replacing some of the electrical components inside the controller, resulting in lower safety.

In view of this, embodiments of the present application provide a powertrain and a vehicle, in which the electrical components in the controller are divided into two parts, namely a first control module and a second control module. One of the parts can concentratedly arrange the electrical components with a high failure rate. For example, the second control module includes a charging control unit. In this way, when disassembling and repairing the electrical components with the high failure rate, other electrical components will not be collided and damaged, thus ensuring high safety.

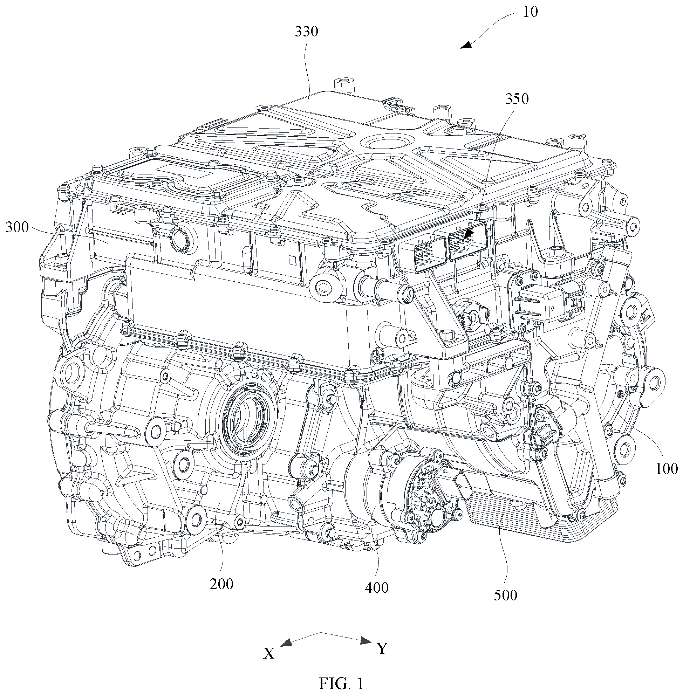

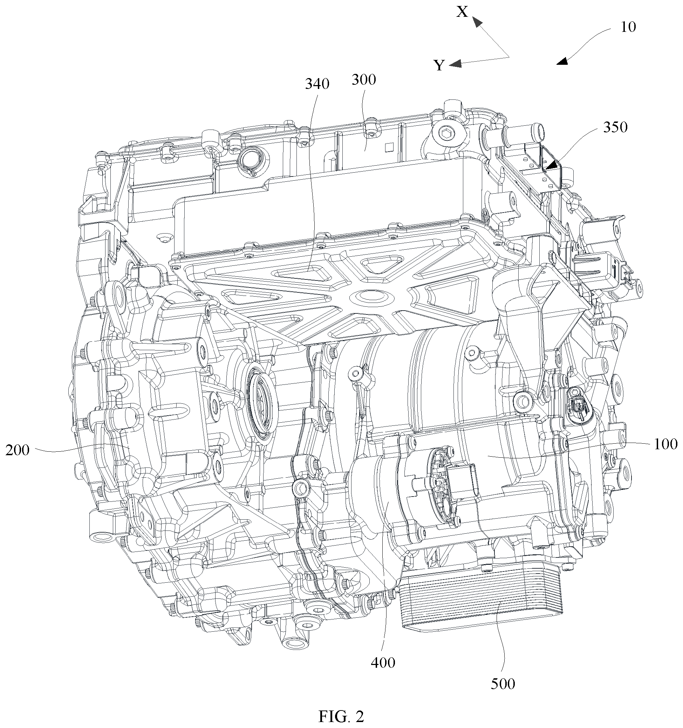

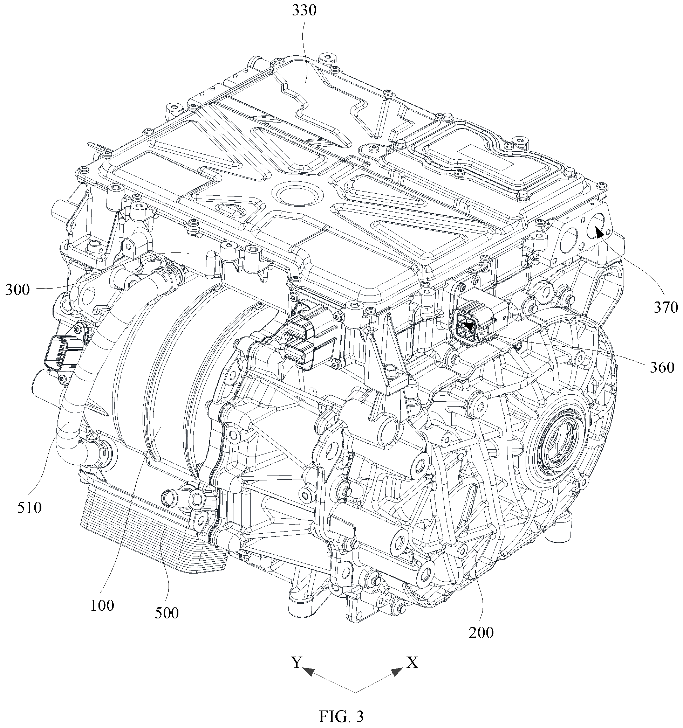

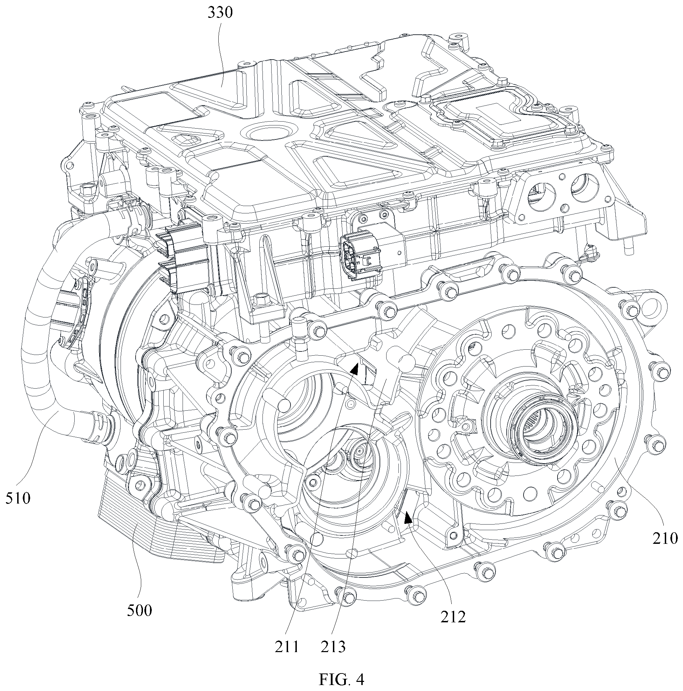

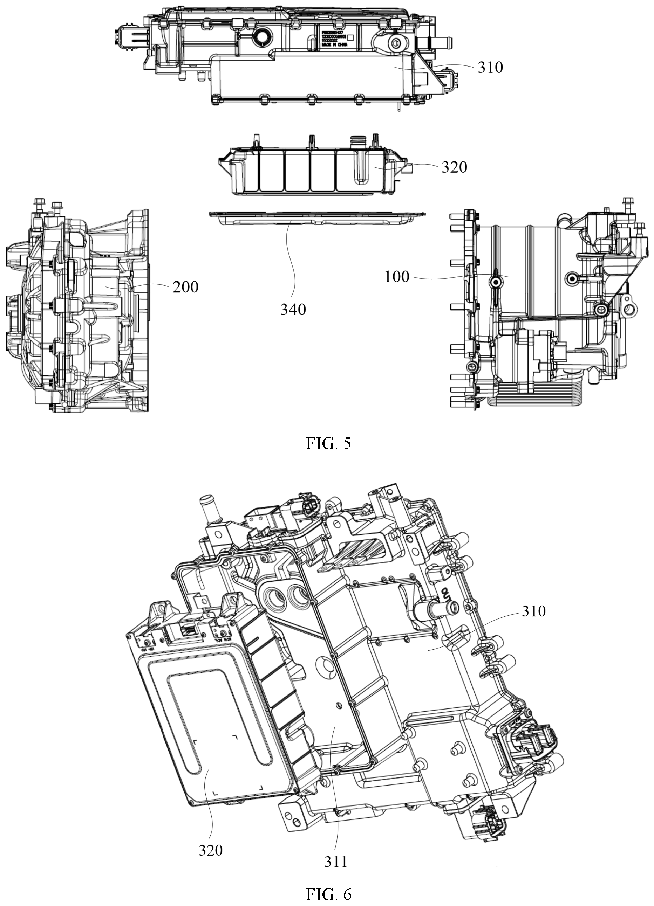

FIG. 1 is a schematic structural diagram of a powertrain provided by an embodiment of the present application. FIG. 2 is another schematic structural diagram of a powertrain provided by an embodiment of the present application. FIG. 3 is another schematic structural diagram of a powertrain provided by an embodiment of the present application. FIG. 4 is another schematic structural diagram of a powertrain provided by an embodiment of the present application. FIG. 5 is an exploded schematic diagram of a powertrain provided by an embodiment of the present application. FIG. 6 is an exploded schematic diagram of a controller provided by an embodiment of the present application.

Please refer to FIG. 1 to FIG. 6, this embodiment provides a powertrain 10 applied to a vehicle and for providing power to the vehicle. The powertrain 10 includes a motor 100, a reducer 200 and a controller 300. The motor 100 and the reducer 200 are each electrically connected to the controller 300 to control the operation of the motor 100 and the reducer 200 respectively.

In some embodiments of the present application, the controller 300 includes a controller housing 310, and a first control module and a second control module 320 that are arranged within the controller housing 310, that is, the electrical components within the controller 300 are divided into two parts. Exemplarily, the controller 300 includes two printed circuit boards (Printed Circuit boards, PCB). For example, the first control module corresponds to a first circuit board, and the second control module 320 corresponds to a second circuit board.

In some embodiments of the present application, the electrical components can be distinguished based on the frequency of failure. For example, the electrical components with a high failure rate are used as the second control module 320.

In some embodiments of the present application, the first control module includes a vehicle control unit and a motor control unit (Motor Control Unit, MCU). The vehicle control unit includes a vehicle controller (Vehicle Control Unit, VCU), which is configured to collect vehicle information and driver's intention, control vehicle operation, diagnose vehicle faults, etc. The motor control unit can change rotational state of the motor 100 according to an instruction of the vehicle controller.

In some embodiments of the present application, the first control module also includes a battery management system (Battery Management System, BMS), which can be connected to a power battery and the vehicle and is configured to collect, process and store information during the operation of the power battery and information exchanged between the power battery and an external device (such as the vehicle controller), etc., thereby enhancing the safety and service life of the power battery.

In some embodiments of the present application, the battery management system includes a high voltage battery management unit (High Voltage BMS, HMBS) and a low voltage battery management unit (Low Voltage BMS, LMBS). The high voltage battery management unit may be integrated with an algorithm for controlling the operation of the high voltage battery, and the low voltage battery management unit may also be integrated with an algorithm for controlling the operation of the low voltage battery. This embodiment does not limit the types of algorithms within the high voltage battery management unit and the low voltage battery management unit.

In some embodiments of the present application, the second control module 320 includes a charging control unit, an electric vehicle communication controller (Electric Vehicle Charging Controller, EVCC for short), and a communication module. The charging control unit includes an on-board charger (On-board Charger, OBC) and a direct current-direct current converter (DC-DC converter). The on-board charger is a charger fixed to the vehicle and used to charge the power battery. The DC-DC converter is configured to convert a high direct current voltage of the power battery to a low direct current voltage so as to power the electrical components of the vehicle. The electric vehicle communication controller can communicate with an electric vehicle, a charging station and power grid through a communication module to achieve interaction and control of information, which helps to understand the real-time charging requirement of the electric vehicle and ensures precise control of various parameters during the charging process. Additionally, by setting up the EVCC, a multi-protection mechanism can be achieved, which can, for example, provide overcurrent, overvoltage and temperature protections in response to possible anomalies to ensure the safety of the charging process.

In some embodiments of the present application, the on-board charger and the DC-DC converter may be provided separately in the controller housing 310, or the on-board charger and the DC-DC converter may also be integrated into one piece and disposed in the controller housing 310.

In some embodiments of the present application, the controller housing 310 is provided with a fast charging interface 350, a slow charging interface 360, and a direct current bus screw interface 370, etc. The fast charging interface 350 is configured to connect to the high voltage battery management unit, and the slow charging interface 360 is electrically connected to the on-board charger of the charging control unit. In this way, a charging mode of the vehicle provided in this embodiment is divided into fast charging and slow charging, users can adopt different charging modes according to their actual situations to charge the power battery, which is relatively convenient to use.

In some embodiments of the present application, the first circuit board and the second circuit board are electrically connected and can interact with each other. For example, the second circuit board is provided with an IGBT (Insulate-Gate Bipolar Transistor, Insulate-Gate Bipolar Transistor) module, an input end of the IGBT module is connected to a busbar capacitor, and an output end thereof is connected to a three-phase busbar of the motor 100 so as to convert the direct current of the power battery to alternating current.

In some embodiments of the present application, a controller local area network interface may also be provided on the first circuit board. This embodiment does not limit the types, layouts, etc. of electrical components on the first circuit board and the second circuit board.

In some embodiments of the present application, the controller housing 310 is provided with a first opening and a second opening, and the controller housing 310 is further provided with a first cover 330 and a second cover 340. The first cover 330 is configured to openably cover the first opening, and the second cover 340 is configured to openably cover the second opening.

In this way, the controller housing 310, the first cover 330 and the second cover 340 can enclose to form a cavity for accommodating the first control module and the second control module 320.

In some embodiments of the present application, the first cover 330 and the controller housing 310, as well as the second cover 340 and the controller housing 310, can be connected by threaded fasteners, having high connection stability.

In some embodiments of the present application, the first opening is opposite to the first control module, and the second opening is opposite to the second control module 320.

In this way, when the first cover 330 is opened, the first control module is exposed, while the second control module 320 remains covered within the second cover 340, and the second cover 340 provides protection for the second control module 320. When the second cover 340 is opened, the second control module 320 is exposed, while the first control module is still covered within the first cover 330, and the first cover 330 provides protection for the first control module.

In this way, by dividing the controller 300 into two parts and limiting the corresponding opening sizes of the two parts, the controller 300 can have a high degree of integration, and when one part is disassembled and repaired, the other part can be protected from collision and damage to the other part, ensuring high safety.

In some embodiments of the present application, the first opening and the second opening can be provided on any side wall of the controller housing 310. For example, the first opening and the second opening can be provided on the same side wall of the controller housing 310. In this case, the first opening and the second opening can be in communication with each other or not.

In some embodiments of the present application, please refer to FIG. 1 and FIG. 2, the first opening and the second opening are respectively located on two opposite side walls of the controller housing 310, and correspondingly, the first cover 330 and the second cover 340 are also located on two opposite side walls of the controller housing 310. Exemplarily, the first opening and the second opening are respectively provided on top and bottom walls of the controller housing 310.

In this way, the first control module and the second control module 320 are provided back to back, and the electrical components on the first control module and the electrical components on the second control module 320 are spaced far apart from each other. When one of the first control module and the second control module 320 is disassembled and repaired, the other will not be collided and damaged.

In some embodiments of the present application, an inner cavity of the controller housing 310 may not be divided, and the first control module and the second control module 320 are simultaneously disposed in the inner cavity of the controller housing 310 and are each connected to the inner wall of the controller housing 310.

In some embodiments of the present application, the inner cavity of the controller housing 310 can also be divided. The controller housing 310 is provided with a partition plate 311 (as shown in FIG. 6), which is configured to divide the inner cavity of the controller housing 310 into two parts. For sake of illustration, these two cavities can be called a first cavity and a second cavity. The first control module and the second control module 320 are respectively located in the cavities at both sides of the partition plate 311, that is, the first control module is provided in the first cavity and the second control module 320 is provided in the second cavity. Thus, the first control module and the second control module 320 can be separated by the partition plate 311, avoiding collision and damage to the first control module or the second control module 320 during disassembly and maintenance.

In some embodiments of the present application, the motor 100 includes a motor housing and a motor body disposed within the motor housing. The motor housing is configured to provide protection for the motor body, and the motor body has an output shaft for outputting power from the motor body.

In some embodiments of the present application, the reducer 200 includes a reducer housing 210 and a gear assembly (not shown) disposed within the reducer housing 210, and the reducer housing 210 is configured to provide protection for the gear assembly. The reducer housing 210 is connected to the motor housing, so that the reducer 200 and the motor 100 can be connected as a whole, resulting in a high degree of integration of the powertrain 10.

In some embodiments of the present application, the gear assembly is connected to the output shaft of the motor body, so that the output shaft of the motor body can be slowed down. The gear assembly includes a plurality of gears, and the gear assembly may include a plurality of gears according to the deceleration requirements to set different deceleration ratios, which is not limited in this embodiment.

In some embodiments of the present application, the gear assembly including a driving gear and a driven gear is taken as an example for explanation. The driving gear is coaxially connected to the output shaft of the motor body, and the driven gear meshes with the driving gear.

In some embodiments of the present application, the plurality of gears are arranged along a first direction X, and rotating shafts of the plurality of gears are parallel to the output shaft of the motor body, and the first direction X is perpendicular to the output shaft of the motor body. For convenience of illustration, the output shaft of the motor body can be extended along a second direction Y.

In this way, one end of the reducer 200 where the driving gear is disposed is connected to one end of the motor 100 along the second direction Y, and one end of the reducer 200 where the driven gear is disposed protrudes from the motor 100 along the first direction X. That is, the motor 100 and the reducer 200 are approximately L-shaped, so that the motor housing and the reducer housing 210 form an included angle area.

In some embodiments of the present application, the controller 300 is located on a side of the motor housing along a circumferential direction of the output shaft of the motor body, and at least one of the motor housing and the reducer housing 210 is connected to the controller housing 310.

In some embodiments of the present application, the motor housing and the reducer housing 210 are simultaneously connected to the controller housing 310, both the motor housing and the reducer housing 210 are provided with a protrusion connected to the controller housing 310, and a connection structure such as a bolt hole is provided on the protrusion.

In this way, the motor 100, the reducer 200 and the controller 300 are connected as a whole with a higher degree of integration and structural stability. Moreover, there is a relatively small distance between the motor 100 and the controller 300, as well as between the reducer 200 and the controller 300, to simplify the electrical connection structure between the motor 100 and the controller 300, as well as between the reducer 200 and the controller 300.

In some embodiments of the present application, at least part of the controller housing 310 protrudes into the included angle area. In this way, the controller housing 310 can be divided into two parts, where one part is located on the side, such as the top, of the motor housing and the reducer housing 210, and the other part is clamped between the motor housing and the reducer housing 210, so that the second control module 320 and the second cover 340 are both within the included angle area.

In this way, even if the electrical components within the controller are set up in two parts, the size of the powertrain 10 will not be additionally increased, and the powertrain 10 has a high space utilization and a compact structure. Moreover, the included angle area between the motor housing and the reducer housing 210 can form an operating area for disassembling and assembling the second cover 340 and the second control module 320, making the operation convenient.

In some embodiments of the present application, the powertrain 10 also includes a cooling unit for cooling the controller 300. The cooling unit has a cooling pipeline for the flow of cooling fluid, which can be water or other cooling medium.

In some embodiments of the present application, the cooling pipeline includes a first cooling section and a second cooling section. The first cooling section is configured for heat exchange with the first control module, the first cooling section may be a cold plate or a meandering pipe. The second cooling section is configured for heat exchange with the second control module 320, the second cooling section may be a cold plate or a meandering pipe. The first cooling section is in communication with the second cooling section.

In this way, the first control module and the second control module 320 can be cooled simultaneously through a single cooling pipeline. The structure is relatively simple and the manufacturing cost is low.

In some embodiments of the present application, the reducer housing 210 contains lubricating oil, which is configured to lubricate the gear assembly, bearings and other components, while also cooling the reducer 200.

In some embodiments of the present application, please refer to FIG. 4, FIG. 4 shows part of an inner wall surface of the reducer housing 210. The inner wall surface of the reducer housing 210 is also provided with an oil collection groove 213. The oil collection groove 213 can be located between the driving gear and the driven gear and above the rotating shafts of the driving gear and the driven gear. In this way, the driven gear rotates and drives the lubricating oil to splash, the splashed lubricating oil can be thrown into the oil collection groove 213, so that the lubricating oil in the oil collection groove 213 can provide lubrication for the bearings and other transmission parts at high positions, thereby improving the uniformity of lubrication in the reducer 200.

In some embodiments of the present application, the oil collection groove 213 and the reducer housing 210 can be cast into one piece to increase the integration level between the oil collection groove 213 and the reducer housing 210, and to reduce the assembly process and cost of the reducer 200.

In some embodiments of the present application, the reducer housing 210 is provided with a first through hole 211 and a second through hole 212. Both the first through hole 211 and the second through hole 212 are in communication with inner and outer sides of the reducer housing 210, and both the first through hole 211 and the second through hole 212 are in communication with an inner cavity of the motor housing. In this way, the reducer housing 210 and the motor housing can be in communication with each other respectively through the first through hole 211 and the second through hole 212.

In some embodiments of the present application, the first through hole 211 is located within an area enclosed by the oil collection groove 213. In this way, a lubrication groove collected in the lubrication groove can be introduced into the motor housing through the first through hole 211, to lubricate and cool the motor 100.

In some embodiments of the present application, a height of the first through hole 211 is greater than that of the second through hole 212. Exemplarily, the first through hole 211 is located above the rotating shaft of the driven gear, and the second through hole 212 is located below the rotating shaft of the driven gear.

In this way, the lubricating oil in the reducer housing 210 and the lubricating oil in the motor housing can flow to each other through the second through hole 212, and an oil level of the lubricating oil in the reducer housing 210 is approximately the same as that in the motor housing to improve the fluidity of the lubricating oil in the reducer 200 and the motor 100.

For example, when the oil level of the lubricating oil in the reducer housing 210 is higher than that in the motor housing, the lubricating oil in the reducer housing 210 can be introduced into the motor housing through the second through hole 212. When the oil level of the lubricating oil in the motor housing is higher than that in the reducer housing 210, the lubricating oil in the motor housing can be introduced into the reducer housing 210 through the second through hole 212.

That is to say, the lubricating oil in the reducer 200 and the lubricating oil in the motor 100 can flow to each other to effectively utilize the lubricating oil.

In some embodiments of the present application, the powertrain 10 further includes an oil pump 400 and a heat exchanger 500. The heat exchanger 500 has a first chamber (not shown) and a second chamber (not shown) that are separated from each other. One end of the oil pump 400 is in communication with the inner cavity of the motor housing and the other end of the oil pump 400 is in communication with a first end of the first chamber, a second end of the first chamber is respectively in communication with the reducer housing 210 and the motor housing. Exemplarily, the first chamber can be in communication with the motor housing and the reducer housing 210 respectively through different pipelines, and the second chamber is in communication with the cooling pipeline. For example, the second chamber is in communication with the first cooling section through a connecting pipeline 510.

In this way, the oil pump 400 can draw the lubricating oil from the motor housing into the first chamber of the heat exchanger 500, and meanwhile the cooling fluid from the cooling unit enters the second chamber, enabling the cooling fluid to exchange heat with the lubricating oil and cool down the lubricating oil. Then, the cooled lubricating oil is introduced into the reducer housing 210 and the motor housing through two separate pipelines respectively, to lubricate and cool the motor 100 and the reducer 200.

Since the second chamber is communicated with the cooling pipeline, the cooling unit may simultaneously dissipate heat from the first control module, the second control module 320 and the lubricating oil. Exemplarily, the cooling fluid can flow through the heat exchanger 500, the second cooling section and the first cooling section in sequence via the cooling pipeline, thereby cooling the heat exchanger 500, the second cooling section and the first cooling section through heat exchange. After being heated by the heat exchange, the cooling fluid may undergo heat dissipation and temperature reduction and then cool the the heat exchanger 500, the second cooling section and the first cooling section again. The cooling unit has a high cooling efficiency and a simple structure.

In some embodiments of the present application, after the lubricating oil in the reducer housing 210 is collected into the oil collection groove 213, a portion of the lubricating oil can be reintroduced into the motor housing via the first through hole 211, so that the oil pump 400 can draw the lubricating oil out of the motor housing.

In some embodiments of the present application, a height of the motor 100 is relatively smaller than that of the reducer 200, that is, there is a height difference between the motor 100 and the reducer 200. To reduce the size of the powertrain 10, upper ends of the motor 100 and the reducer 200 can be arranged to be approximately flush, the controller 300 is disposed above the motor 100 and the reducer 200. In this way, there is a height difference between the lower end of the motor 100 and the lower end of the reducer 200. Meanwhile, the oil pump 400 and the heat exchanger 500 are disposed below the motor 100, thereby making the powertrain 10 compact in structure and high in integration. Moreover, by disposing the heat exchanger 500 below the motor 100, the pipelines between the heat exchanger and the motor housing as well as the reducer housing 210 can all have a smaller size, so as to reduce an overall design length of an oil circuit and help lower the cost of the oil circuit.

In this way, the motor housing, the reducer housing 210, the oil pump 400, and the heat exchanger 500 can form a complete lubricating oil circuit. Through this lubricating oil circuit, the reducer 200 and the motor 100 are lubricated and cooled simultaneously, featuring a compact structure and high efficiency.

The present embodiment also provides a vehicle, including the above-mentioned powertrain 10. The structure, function and working principle of the powertrain 10 have been described in the above embodiments and will not be elaborated in this embodiment.

In some embodiments of the present application, depending on the type of vehicle, the vehicle can be a sedan, a bus or a van. Depending on the source of power, the vehicle may be any one of the following: an electric vehicle (Electric Vehicle, EV), a pure electric vehicle /battery electric vehicle (Pure Electric Vehicle /Battery Electric Vehicle, PEV/BEV), a hybrid electric vehicle (Hybrid Electric Vehicle, HEV), a range extended electric vehicle (Range Extended Electric Vehicle, REEV), a plug-in hybrid electric vehicle (Plug-in Hybrid Electric Vehicle, PHEV), and a new energy vehicle (New Energy Vehicle).

By adopting the above-mentioned powertrain 10, the on-board charger and DC-DC converter can be disassembled, assembled and maintained conveniently without colliding or damaging other electrical components of the first control module, ensuring a relatively high safety.

### Embodiment 2

This embodiment of the present application provides an on-board charger, a vehicle controller including the on-board charger, and a vehicle including the vehicle controller. The vehicle may be a sedan, a bus or a van. For example, the vehicle may be any one of the following: an electrocar/electric vehicle (Electric Vehicle, EV for short), a pure electric vehicle/battery electric vehicle (Pure Electric Vehicle /Battery Electric Vehicle, PEV/BEV for short), a hybrid electric vehicle (Hybrid Electric Vehicle, HEV for short), a range extended electric vehicle (Range Extended Electric Vehicle, REEV), a plug-in hybrid electric vehicle (Plug-in Hybrid Electric Vehicle, PHEV), and a new energy vehicle (New Energy Vehicle).

As described in the background technology above, a charger typically includes a housing and a charger body disposed within the housing. The housing of the charger typically includes of a lower housing and an upper end cover, which together enclose to form an accommodating cavity, and the charger body is located within the accommodating cavity. The charger body is configured to charge the battery, and the housing is configured to accommodate the charger body to achieve the installation and fixation of the charger body. The charger is usually arranged separately in the vehicle.

However, in the aforementioned charger, its housing is large in structure and heavy in weight, which is not conducive to the lightweight design of the charger and increases the cost of the charger.

Based on the above problems, an embodiment of the present application provides an on-board charger. By configuring the on-board charger to include a base plate and enabling the on-board charger to be detachably connected to the vehicle controller via the base plate, there is no need to provide a housing in the on-board charger. Only the base plate needs to be arranged to connect with the housing of the vehicle controller, which can omit structures such as an upper end cover and a side wall of a lower housing of the on-board charger, and can effectively reduce the structure size and weight of the on-board charger, thereby achieving the lightweight design of the on-board charger effectively and significantly lowering the material cost of the on-board charger.

The following is a detailed description of the on-board charger provided in the embodiment of the present application in conjunction with the drawings.

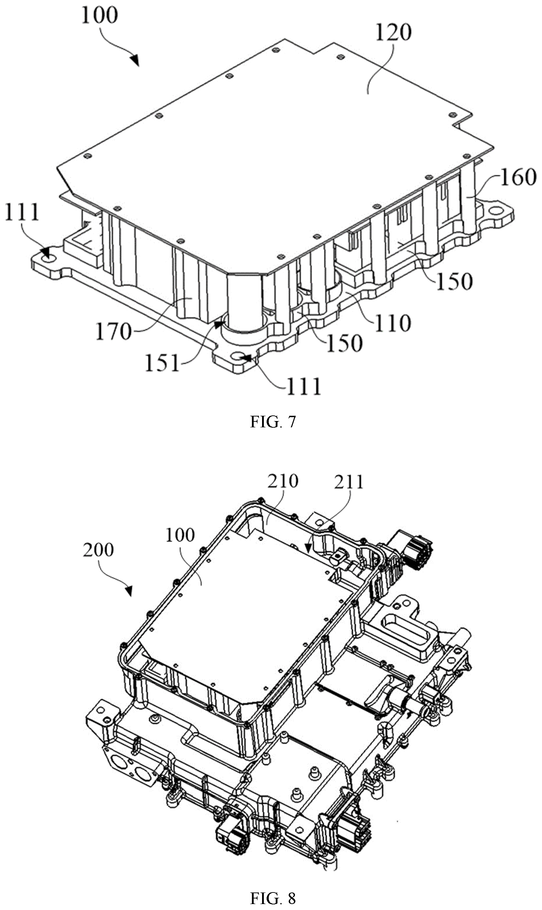

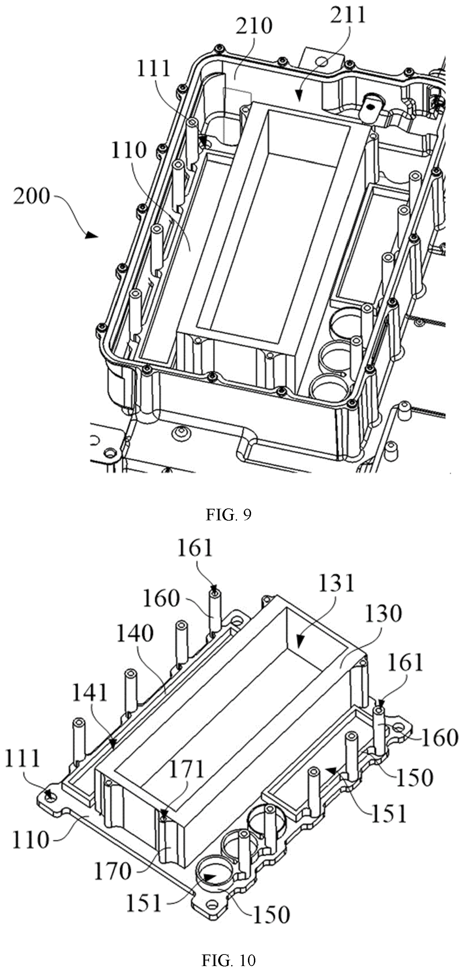

FIG. 7 is a schematic structural diagram of an on-board charger provided by an embodiment of the present application. FIG. 8 is a schematic structural diagram of a vehicle controller provided by an embodiment of the present application. FIG. 9 is a schematic structural diagram of an on-board charger arranged in a vehicle controller provided by an embodiment of the present application.

The embodiment of the present application provides an on-board charger 100, the on-board charger 100 can be used in a vehicle controller 200. As shown in FIG. 7. The on-board charger 100 may include a base plate 110 and a charger body 120. The charger body 120 may be located on the base plate 110 and be detachably connected to the base plate 110. For example, the charger body 120 can be detachably connected to the base plate 110 by means of a clamping, buckling, or bolt connection, etc.

The base plate 110 can has mounting holes 111, the mounting holes 111 can be used to connect to the vehicle controller 200, so that the on-board charger 100 can be detachably connected to the vehicle controller 200 via the mounting holes 111. For example, the on-board charger 100 and the vehicle controller 200 can be detachably connected by bolts. For example, in combination with FIG. 8 and FIG. 9, the vehicle controller 200 may include a housing 210. The housing 210 may have an accommodating cavity 211, and the on-board charger 100 may be located within the accommodating cavity 211 of the housing 210 of the vehicle controller 200 and be detachably connected to the housing 210.

For example, threaded holes may be provided on a bottom wall of the housing 210 of the vehicle controller 200, and the mounting holes 111 on the base plate 110 of the vehicle charger 100 may be aligned with the threaded holes on the bottom wall of the vehicle controller 200. Bolt fasteners can pass through the mounting holes 111 on the base plate 110 and be screwed into the threaded holes on the bottom wall of the vehicle controller 200, so that the base plate 110 is connected to the bottom wall by the bolt fasteners, thereby enabling the on-board charger 100 to be detachably connected to the vehicle controller 200.

When the on-board charger 100 malfunctions and requires repair, the base plate 110 of the on-board charger 100 can be removed from the vehicle controller 200 to repair or replace the on-board charger 100. In this way, the convenience of repairing or replacing the on-board charger 100 can be increased and the flexibility of the on-board charger 100 in use can effectively enhanced.

The on-board charger 100 is located within the housing 210 of the vehicle controller 200 and can share one housing 210 with the vehicle controller 200, so there is no need to provide the housing 210 in the on-board charger 100. Only the base plate 110 needs to be arranged to connect with the housing 210 of the vehicle controller 200, which can omit structures such as the upper end cover and the side wall of the lower housing 210 of the on-board charger 100, and can effectively reduce the structure size and weight of the on-board charger 100, thereby achieving the lightweight design of the on-board charger 100 effectively and significantly lowering the material cost of the on-board charger.

FIG. 10 is a schematic structural diagram of an on-board charger with a charger body removed provided by an embodiment of the present application.

Please refer to FIG. 10, the on-board charger 100 may also include a cooling pipeline 130. The cooling pipeline 130 may be located on the base plate 110 and connected to the base plate 110, the cooling pipeline 130 may contain a coolant, and the charger body may be distributed around the cooling pipeline 130.

For example, the charger body 120 may include a circuit board and electronic components, such as a capacitor and an inductor, located on the circuit board. The circuit board may be located on the cooling pipeline 130, the electronic components may be located on a side of the circuit board facing the cooling pipeline 130, and various electronic components may be distributed around the cooling pipeline 130.

The coolant can flow within the cooling pipeline 130 to achieve heat transfer. During operation, the charger body 120 can generate heat, which can be transferred to the coolant through the cooling pipeline 130 to achieve heat dissipation and temperature reduction. This can effectively reduce or prevent the charger body 120 from being affected in its normal operation due to too high temperature, and help improve the reliability and stability of the on-board charger 100 during operation.

Continuing to refer to FIG. 10, the cooling pipeline 130 can enclose to form a first accommodating groove 131. The first accommodating groove 131 can contain a first thermal conductive adhesive (not shown), and at least part of the charger body 120 can be embedded in the first thermal conductive adhesive. For example, the electronic components in the circuit board that are opposite to the first accommodating groove 131 can be inserted into the thermal conductive adhesive groove. The first thermal conductive adhesive can enhance heat conduction, so that the heat generated by the electronic components located in the first accommodating groove 131 can be transferred through the first thermal conductive adhesive to the cooling pipeline 130 so as to dissipate the heat through the coolant in the cooling pipeline 130, which helps to effectively improve the heat dissipation effect of the charger body 120 and further enhance the reliability and stability of the charger's operation.

Continuing to refer to FIG. 10, the on-board charger may also include a first barrier 140. The first barrier 140 may enclose to form a second accommodating groove 141, which may contain a second thermal conductive adhesive (not shown), and at least part of one end of the charger body 120 may extend into the second thermal conductive adhesive. The heat generated by the charger body 120 during operation can also be conducted through the one end into the second thermal conductive adhesive so as to dissipate heat outward through the second thermal conductive adhesive, thereby achieving heat dissipation and cooling of the charger body 120.

Continuing to refer to FIG. 10, the on-board charger 100 may also include a second barrier 150. The second barrier 150 can be located on the base plate 110 and connected to the base plate 110. The cooling pipeline 130 can be located between the second barrier 150 and the first barrier 140. The second barrier 150 can enclose to form a third accommodating groove 151. The third accommodating groove 151 may contain a third thermal conductive adhesive, and at least part of one end of the charger body 120 may extend into the third thermal conductive adhesive. The heat generated by the charger body 120 during operation can also be conducted through the one end into the third thermal conductive adhesive so as to dissipate heat outward through the third thermal conductive adhesive, thereby achieving heat dissipation and cooling of the charger body 120.

The number of the third accommodating groove 151 can be multiple, and the shapes of the grooves can be different. For example, as shown in the figure, the number of the third accommodating groove 151 can be four, one of the four containment grooves can be rectangular, and the shapes of the remaining three containment grooves can be circular, to meet the heat dissipation requirements of differently shaped components in the charger body 120.

Continuing to refer to FIG. 10, the on-board charger 100 may also include a plurality of first connecting columns 160. The plurality of first connecting columns 160 may be distributed on both sides of the first accommodating groove 131, and the first connecting columns 160 may be located at the edge of the base plate 110. The first connecting columns 160 may be provided with first connecting holes 161, and the charger body 120 may be connected to the first connecting columns 160 through the first connecting holes 161.

For example, the charger body 120 and the first connecting columns 160 may be connected by the bolt fasteners, and the charger body 120 may have the mounting holes 111 that match the first connecting holes 161, and the mounting holes 111 may be aligned with the first connecting holes 161. The bolt fasteners can pass through the mounting holes 111 on the charger body 120 and be screwed into the first connecting holes 161, so that the charger body 120 can be connected to the first connecting columns 160 through the bolt fasteners. The bolt connection is convenient to operate and reliable, and can effectively enhance the firmness and reliability of the connection between the charger body 120 and the base plate 110. Moreover, it can also facilitate the disassembly of the charger body 120.

Continuing to refer to FIG. 10, the on-board charger 100 may also include a second connecting column 170. The second connecting column 170 can be disposed around the outer periphery of the cooling pipeline 130 and connected to the cooling pipeline 130. The second connecting column 170 may be provided with a second connecting hole 171, and the charger body 120 may be connected to the second connecting column 170 through the second connecting hole 171.

For example, the charger body 120 and the second connecting column 170 can also be connected by a bolt fastener, and the charger body 120 may have a mounting hole 111 that matches the second connecting hole 171, and the mounting hole 111 may be aligned with the second connecting hole 171. The bolt fastener can pass through the mounting hole 111 on the charger body 120 and be screwed into the second connecting hole 171, so that the charger body 120 can be connected to the second connecting column 170 through the bolt fastener. In this way, the firmness and reliability of the connection between the charger body 120 and the base plate 110 can be further enhanced, and the overall structural stability of the on-board charger 100 can be improved.

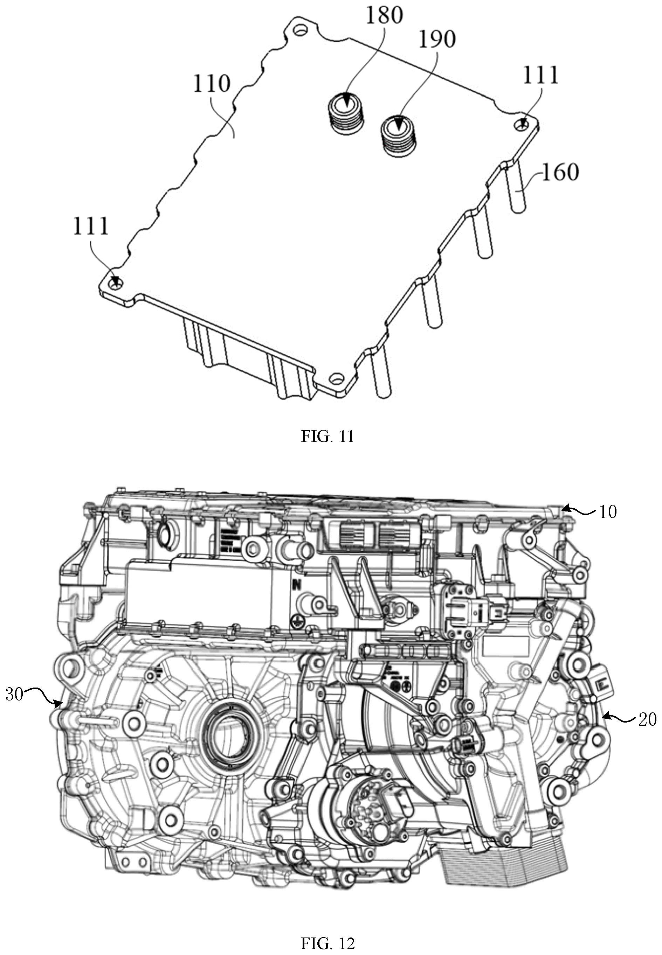

FIG. 11 is a schematic structural diagram of an on-board charger from another perspective provided by an embodiment of the present application.

As shown in FIG. 11, the on-board charger 100 may also include an inlet 180 and an outlet 190. The inlet 180 and the outlet 190 may be located on a side of the base plate 110 facing away from the cooling pipeline 130, and the inlet 180 and outlet 190 may be in communication with the cooling pipeline 130. The coolant can flow from the inlet 180 into the cooling pipeline 130 and then out from the outlet 190 to achieve heat conduction, thereby achieving heat dissipation and cooling of the on-board charger 100 and improving the reliability and stability of the operation of the on-board charger 100.

### Embodiment 3

New energy vehicles have developed rapidly in recent years and have the advantages of low emission pollution, low noise generated by the drive system, low energy consumption, etc. An electric drive system of the new energy vehicle highly integrates components such as a motor, a reducer, a power battery, a motor controller and an on-board charger to meet the normal operation of the vehicle power system.

In the existing technology, the electric drive system of the new energy vehicle includes an electric control assembly, and a reducer and a motor arranged below the electric control assembly. The electric control assembly includes an upper housing, a middle housing and a lower housing connected in sequence from top to bottom. The upper housing is equipped with a high-voltage junction box and a vehicle control unit, the middle housing is equipped with a motor controller, and the lower housing is equipped with an on-board charger and a DC-DC converter. Split-type cooling water channels are arranged in series in the upper, middle and lower housings respectively to dissipate heat for each module.

However, the above layout of the electric control assembly results in low space utilization of the electric control assembly, and the cooling water channels inside the electric control assembly are arranged in a multi-layered split layout, which makes the overall structure of the electric control assembly relatively large and further leads to a lower degree of integration of the electric control assembly with the electric drive system.

Based on this, the present application provides an electric control assembly and a vehicle. The electric control assembly is provided with a housing assembly including a first housing and a second housing, the first housing is configured to accommodate a first control unit of a control assembly, and the second housing is configured to accommodate a second control unit of the control assembly. The second housing is connected to the lower part of the first housing, to make the lower part of the first housing be in a stepped shape, thereby reducing a stacking height when components such as the motor of the electric drive system are connected to the first housing. By providing a cooling assembly that includes a first cooling unit and a second cooling unit, the control assembly shares the first cooling unit for heat dissipation, and the second cooling unit is configured to cool the motor and reducer. By communicating the first cooling unit with the second cooling unit, the electric control assembly, the motor and the reducer have a series cooling channel, which simplifies the layout of the cooling assembly and reduces the occupied space. As a result, the present application increases the space utilization of the electric control assembly and enhances the integration level of the electric control assembly with the electric drive system by optimizing the layouts of the housing assembly and the cooling assembly.

The following describes the embodiments of the present application in conjunction with the drawings.

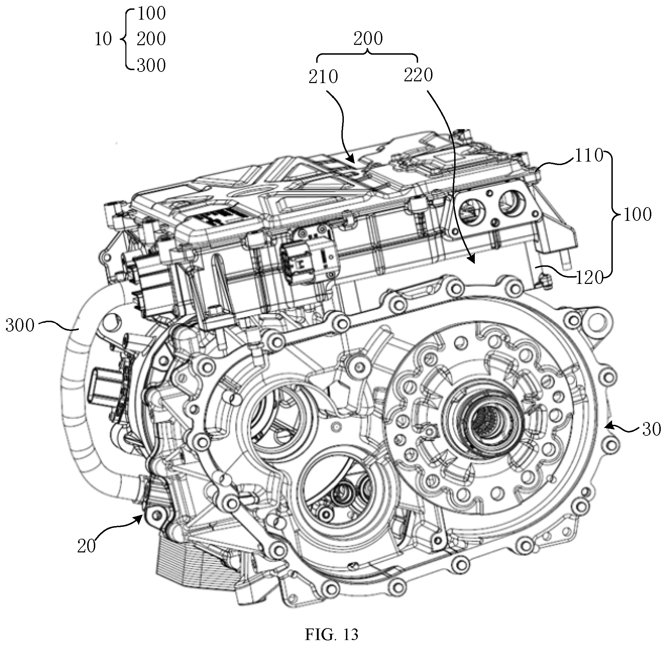

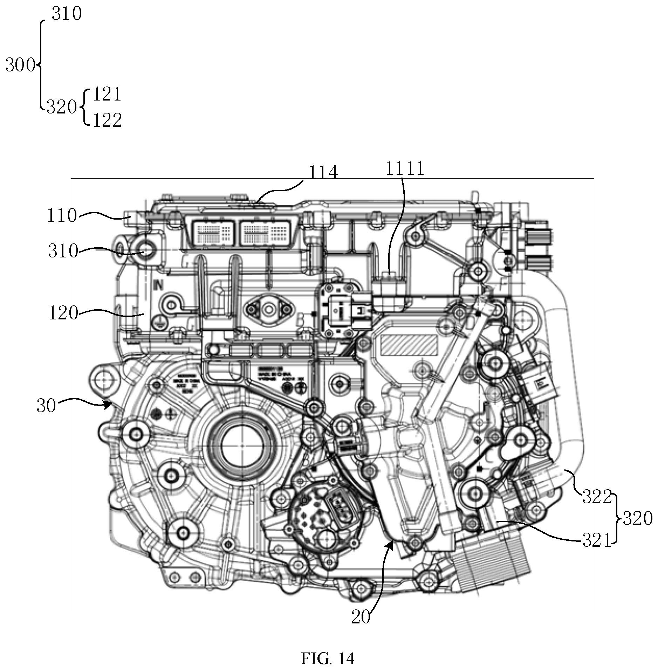

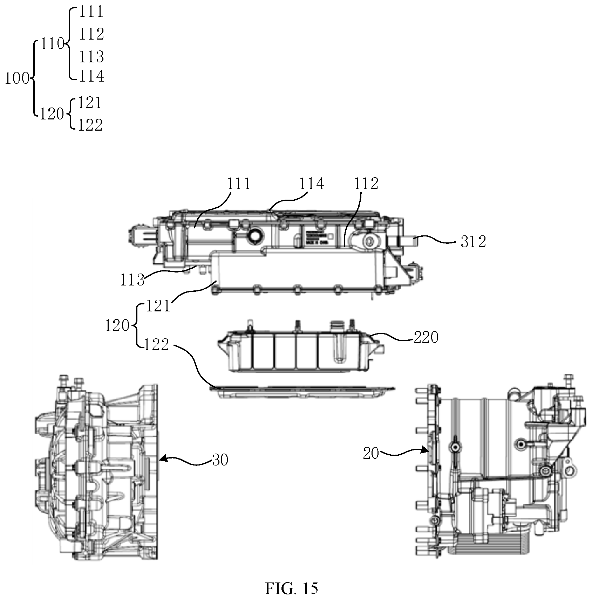

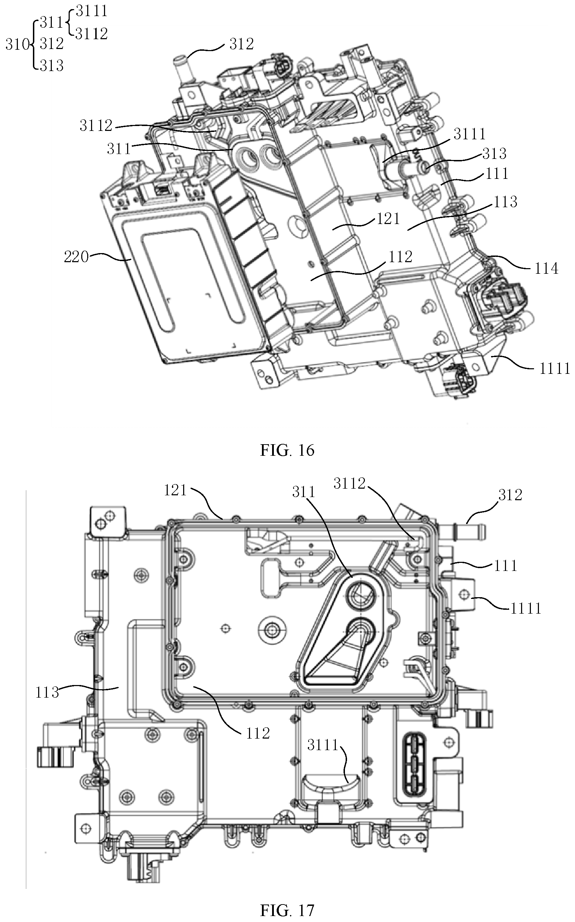

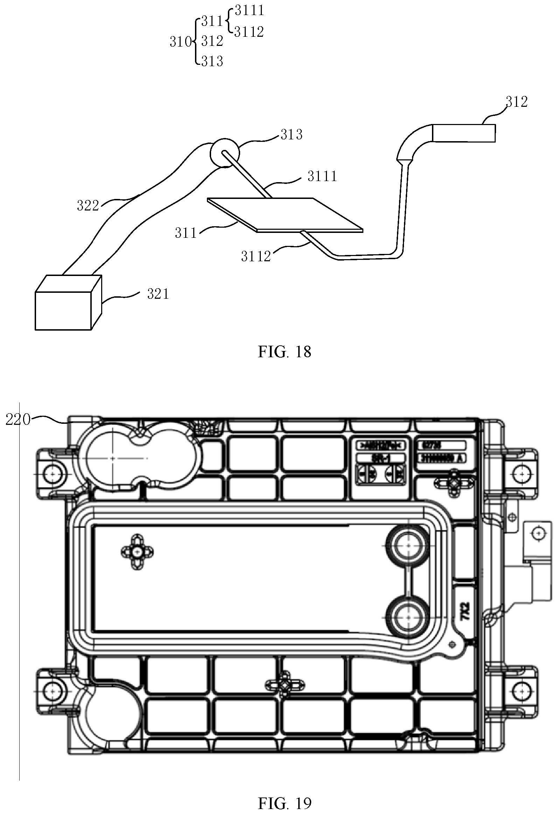

FIG. 12 is a schematic structural diagram of a partial structure of a vehicle provided by an embodiment of the present application. FIG. 13 is a left-view schematic structural diagram of FIG. 12. FIG. 14 is a front-view schematic structural diagram of FIG. 12. FIG. 15 is an exploded schematic diagram of a connection between a housing assembly of an electric control assembly and an electric drive system in FIG. 12. FIG. 16 is an exploded schematic diagram of a connection between a first housing and a second housing of an electric control assembly in FIG. 12. FIG. 17 is a schematic structural diagram of the first housing of the electric control assembly in FIG 16. FIG. 18 is a schematic structural diagram of a cooling assembly of the electric control assembly in FIG. 12. FIG. 19 is a schematic structural diagram of a second control unit in FIG. 16.

As shown in FIGS. 12 to 17, the embodiment of the present application provides an electric control assembly 10 for an electric drive system, including a housing assembly 100, a control assembly 200 and a cooling assembly 300. The housing assembly 100 includes a first housing 110 and a second housing 120, the first housing 110 is configured to connect with a motor 20 and a reducer 30 of the electric drive system, and the second housing 120 is connected below part of the first housing 110.

The control assembly 200 includes a first control unit 210 and a second control unit 220. The first control unit 210 is disposed within the first housing 110, and the second control unit 220 is disposed within the second housing 120.

The cooling assembly 300 includes a first cooling unit 310 and a second cooling unit 320. The first cooling unit 310 is disposed between the first housing 110 and the second housing 120, the second cooling unit 320 is disposed on the motor 20, and the first cooling unit 310 is in communication with the second cooling unit 320 to cool the control assembly 200, the motor 20, and the reducer 30.

In the present application, as shown in FIGS. 12 to 15, the housing assembly 100 includes the first housing 110 and the second housing 120, both the first housing 110 and the second housing 120 have an accommodating cavity, and the accommodating cavities of the first housing 110 and the second housing 120 are respectively used for assembling the first control unit 210 and the second control unit 220. Specifically, the second housing 120 is connected lower part of the first housing 110 to enable the lower part of the first housing 110 to be in a stepped distribution, so that when the first housing 110 is connected to the motor 20 of the electric drive system, a fixing orientation can be adaptively adjusted according to the heights of the components so as to save space. In addition, the electric drive system also includes the reducer 30 rigidly connected to the motor 20. When both the reducer 30 and the motor 20 are fixed to the first housing 110, the second housing 120 is located between the first housing 110 and the motor 20. In this way, when the housing assembly 100 is connected to the electric drive system, the stacking height is reduced, and the space under the first housing 110 is effectively utilized, thus making the overall structure of the electric drive system more compact.

Furthermore, the first cooling unit 310 is disposed between the first housing 110 and the second housing 120, and the first control unit 210 and the second control unit 220 are located on two sides of the first cooling unit 310, respectively. The second cooling unit 320 is disposed on the motor 20, and the first cooling unit 310 is in communication with the second cooling unit 320. Specifically, in the embodiment of the present application, the first cooling unit 310 is connected to an input end of a thermal management cooling system of the vehicle, so that a cooling medium flows into the first cooling unit 310 and then flows from the first cooling unit 310 to the second cooling unit 320 to form a cooling channel. In this way, heat dissipation is achieved for the control assembly 200, the motor 20 and the reducer 30 in sequence. Finally, the heated cooling medium flows into an output end (that is, a heat exchanger) of the thermal management cooling system to be cooled for subsequent heat dissipation again. Exemplarily, the cooling medium may be water or a mixture of water with propylene glycol. The specific type of the cooling medium is determined by the actual heat dissipation requirements and the operating ambient temperature, and this embodiment does not impose any restriction on this.

In this way, the first control unit 210 and the second control unit 220 share the first cooling unit 310, and the second cooling unit 320 of the motor 20 does not need to be separately connected to the input end of the thermal management cooling system. Through the series connection of the first cooling unit 310 and the second cooling unit 320, the electric control assembly 10, the motor 20 and the reducer 30 have a series cooling channel, thereby making the cooling assembly 300 have a simple layout and occupy small space.

Thus, by optimizing the layouts of the housing assembly 100 and the cooling assembly 300, the space utilization of the electric control assembly 10 is increased, and the integration level of the electric control assembly 10 with the electric drive system is enhanced.

In some embodiments, the first housing 110 includes a first enclosure portion 111, a first base plate 112 and a second base plate 113. The first base plate 112 is connected to the second base plate 113, the first enclosure portion 111 is arranged around the first base plate 112 and the second base plate 113, and the second housing 120 is located below the first base plate 112.

As shown in FIGS. 13 to 16, the first housing 110 includes the first enclosure portion 111, the first base plate 112 and the second base plate 113. Exemplarily, in the embodiments of the present application, the first enclosure portion 111 is a quadrilateral structure. Correspondingly, the first base plate 112 and the second base plate 113 may be connected by means of integral molding or other methods to form a quadrilateral structure matching a bottom of the first enclosure portion 111, and the first enclosure portion 111 is arranged around the first base plate 112 and the second base plate 113 by means of welding or the like, thereby forming an accommodating cavity for assembling the first control unit 210. In addition, the first enclosure portion 111 is provided with several output end interfaces of the first control unit 210 to enable an electrical connection of the first control unit 210 to the corresponding controlled module.

Specifically, as shown in FIGS. 15 and 16, the second housing 120 is located on a side of the first base plate 112 away from the first enclosure portion 111, so that the space beneath the first base plate 112 is occupied for arranging the second housing 120. The space beneath the second base plate 113 is not occupied, thus the lower part of the first housing 110 is in a stepped distributed. That is, when the motor 20 and the reducer 30 are connected to the lower part of the first housing 110, the fixing orientation can be adjusted adaptively according to the heights of the components to reduce the stacking height below the first housing 110, thereby effectively utilizing the space and making the overall structure more compact after the electric control assembly 10 is connected to the electric drive system.

In some embodiments, the second housing 120 includes a second enclosure portion 121 and a plug-in portion 122. The second enclosure portion 121 is arranged around a lower side of the first base plate 112 facing away from the first enclosure portion 111, and the plug-in portion 122 is plugged onto the second enclosure portion 121.

Continuing as shown in FIGS. 15 and 16, the second housing 120 is configured with the second enclosure portion 121 on the lower side of the first base plate 112 facing away from the first enclosure portion 111, so that the first base plate 112 and the second enclosure portion 121 together form an accommodating cavity for assembling the second control unit 220. Correspondingly, an assembly hole are formed on a side of the first base plate 112 facing the second control unit 220 to facilitate the fixation of the second control unit 220 inside the second housing 120. In addition, a number of output end interfaces of the second control unit 220 are arranged on the second enclosure portion 121 to enable the electrical connection between the second control unit 220 and the corresponding controlled module. It should be noted that the structure of the second enclosure portion 121 only needs to match the overall structure of the second control unit 220, ensuring that the size of the second enclosure portion 121 is minimized while accommodating the second control unit 220, in order to save space beneath the first housing 110. The specific size setting is determined based on practical applications, and is not limited in this embodiment of the present application.

Furthermore, the second housing 120 also includes the plug-in portion 122. Exemplarily, the plug-in portion 122 is provided with a plug-in strip. Correspondingly, a plug-in groove is provided on the side of the second enclosure portion 121 facing away from the first base plate 112. The plug-in strip is inserted into the plug-in groove, so that the plug-in portion 122 is detachably connected to the second enclosure portion 121. In this way, the plug-in portion 122 and the second enclosure portion 121 jointly enclose the second control unit 220 inside the second housing 120, so as to improve the protection for the second control unit 220. By providing the plug-in portion 122, the second control unit 220 can be disassembled and assembled separately, thereby facilitating rapid disassembly and assembly during later module maintenance while maintaining a high level of integration in the present application, without the need to disassemble and assemble the entire electric control assembly 10.

In some embodiments, the first cooling unit 310 includes a first cooling member 311. The first cooling member 311 is disposed on the first base plate 112 and has a cooling water channel inlet 3112 and a cooling water channel outlet 3111 that are in communication with each other.

In the present application, as shown in FIGS. 16 to 18, the first cooling unit 310 includes a first cooling member 311. Correspondingly, a through hole for mounting the first cooling member 311 is formed on the first base plate 112, and the first cooling member 311 can be nested and assembled on the first base plate 112 by a fastener or the like. Thus, one side of the first cooling member 311 faces the first housing 110 and is in contact with a heat-generating module of the first control unit 210, and the other side of the first cooling member 311 faces the second housing 120 and is in contact with a heat-generating module of the second control unit 220, such that the first control unit 210 and the second control unit 220 share the first cooling member 311 for heat dissipation.

In a specific arrangement, the first cooling member 311 may be a liquid cooling plate or the like. The liquid cooling plate has a hollow cavity inside, and also a cooling water channel inlet 3112 and a cooling water channel outlet 3111 that are in communication with each other. The cooling water channel inlet 3112 is connected to the input end of the vehicle's thermal management cooling system through the cooling pipeline, so that a flowing cooling medium is contained in the liquid cooling plate. The cooling water channel outlet 3111 can be connected to the second cooling unit 320, enabling the cooling medium to flow from the first cooling member 311 to the second cooling unit 320, thereby achieving heat dissipation for the control assembly 200, the motor 20 and the reducer 30 in sequence.

In this way, by setting up the liquid cooling plate, the control assembly 200 located in the first housing 110 and the second housing 120 can share the first cooling member 311 without the need for a split cooling member, thus saving space in the housing assembly 100 and making the electric control assembly 10 more compact. It should be noted that the arrangement size of the liquid cooling plate on the first base plate 112 can be determined according to the heat flux density of the heat-generating modules of the first control unit 210 and the second control unit 220, and is not restricted in the embodiments of the present application.

In some embodiments, in order to enhance the heat dissipation effect of the second control unit 220, a cooling channel is set inside the second control unit 220. The cooling channel may be set in series or in parallel with the first cooling member 311. It should be noted that the layout of the cooling channel in the second housing 120 is related to the accommodating space of the second housing 120 and the heat flux density of the second control unit 220, and is specifically set according to the actual application scenario. It is not restricted in this embodiment.

In some embodiments, the first cooling unit 310 further includes at least one liquid inlet 312 and at least one liquid outlet 313. The liquid inlet 312 is disposed on a side of the first enclosure portion 111 facing the first base plate 112, and the liquid outlet 313 is disposed on a side of the second base plate 113. The liquid inlet 312 is in communication with the cooling water channel inlet 3112, and the liquid outlet 313 is in communication with the cooling water channel outlet 3111.

Continuing as shown in FIGS. 16 to 18, the liquid inlet 312 is disposed on the side of the first enclosure portion 111 facing the first base plate 112, and the liquid inlet 312 is connected to the cooling water channel inlet 3112 via a small-diameter pipeline. The small-diameter pipeline can be fixed on the first base plate 112 by a clip or the like. Thus, the first cooling member 311 can be connected to the input end of the vehicle's thermal management cooling system via the externally arranged liquid inlet 312.

Furthermore, the liquid outlet 313 is disposed on the side of the second base plate 113 adjacent to the motor 20, which shortens a cooling path from the first cooling unit 310 to the second cooling unit 320. The cooling water channel outlet 3111 is connected to the liquid outlet 313 via the small-diameter pipeline, and the first cooling member 311 is connected to the second cooling unit 320 through the externally arranged liquid outlet 313.

In this way, by externally setting the liquid inlet 312 and liquid outlet 313, it not only facilitates the inspection or maintenance of each interface in the future, but also avoids the need to reserve a large-sized interface when the first cooling member 311 is arranged on the first base plate 112. Thus, the layout space of the cooling assembly 300 within the housing assembly 100 of the electric control assembly 10 becomes more compact, thereby enhancing the integration level of the electric control assembly 10.

In some embodiments, the second cooling unit 320 includes a second cooling member 321 and a connecting member 322. The second cooling member 321 is configured to be disposed at the bottom end of the housing of the motor 20, and the second cooling member 321 is in communication with the liquid outlet 313 via the connecting member 322.

As shown in FIGS. 13, 14 and 18, the motor 20 is in communication with the housing of the reducer 30, the motor 20 and the reducer 30 achieve shared oil lubrication through an oil circuit, and the motor 20 is cooled by means of self-agitated oil splashing of the reducer 30. In some embodiments, the temperature of the oil rises as it absorbs heat during vehicle operation, resulting in a decrease in oil viscosity and a reduction in both lubricating and cooling performance.

In the embodiment of the present application, the second cooling member 321 is disposed at the bottom end of the housing of the motor 20. Illustratively, the second cooling member 321 may be an oil cooler, and the connecting member 322 is a liquid cooling pipeline. Specifically, a cooling pipe and an oil pipe are arranged side by side inside the oil cooler. The cooling pipe inside the oil cooler is communicated with the liquid outlet 313 of the first cooling unit 310 through the liquid cooling pipeline to achieve the circulation of a cooling medium, and then the oil pipe inside the oil cooler is communicated with the oil circuits of the motor 20 and the reducer 30 to achieve the circulation of oil. It should be noted that special joints for liquid cooling pipelines are adopted at the joints of the liquid cooling pipelines to prevent the leakage of the cooling medium.

In actual operation, when the oil in the oil circuits of the motor 20 and the reducer 30 heats up and then flows into the oil pipe of the oil cooler. The cooling medium in the cooling pipe of the oil cooler exchanges heat with the oil in the oil pipe, thereby reducing the temperature of the oil to a certain extent. The oil with reduced temperature flows back into the oil circuits of the motor 20 and the reducer 30, and can lubricate and cool the motor 20 and the reducer 30 again. At this point, the cooling medium completes a cooling cycle after flowing through the first cooling unit 310 to the second cooling unit 320 of the electric control assembly 10. Finally, the heated cooling medium flows into the output end (that is, the heat exchanger) of the thermal management cooling system, for cooling.

In this way, the cooling medium from the first cooling member 311 can be conveyed to the second cooling member 321 at the bottom end of the motor 20 housing via the connecting member 322, forming a series cooling channel for the electric control assembly 10, the motor 20 and the reducer 30. This results in a simple layout of the cooling assembly 300 with a small space occupation, thereby improving the integration level of the electric control assembly 10 with the electric drive system.

In some embodiments, the first control unit 210 includes a motor controller. The motor controller is provided in the first housing 110.

In the present application, the first control unit 210 includes a motor controller (Moter Control Unit, MCU). Specifically, the MCU obtains vehicle demand (such as gear, acceleration or braking command) from the vehicle controller and obtains electrical energy from the power battery, and modulates the energy through its own inverter to generate the electrical energy required for driving the motor 20. In this way, it regulates the operating state of the motor 20, ensuring that the rotational speed and torque of the motor 20 meet the different operating requirements of the vehicle.

It should be noted that the first control unit 210 also includes the vehicle controller (Vehicle Control Unit, VCU), a power distribution unit (Power Distribution Unit, PDU), and a battery management system (Battery Management System, BMS). Among them, the VCU is configured to collect component signals such as an automatic control system signal of the motor 20, an accelerator pedal signal and a brake pedal signal, and plays a leading role in the normal driving of the vehicle, the braking system feedback of rechargeable battery heat, as well as fault detection and resolution, etc. PDU is configured for power distribution and management in the high-voltage system, providing functions such as charge and discharge control, high-voltage component power-on control, circuit overload and short-circuit protection, high-voltage sampling, and low-voltage control for the entire vehicle. The BMS serves as an important link between the on-board battery and the vehicle, and is configured for real-time monitoring of the battery's physical parameters, evaluation of the battery state, as well as balanced management of charging-discharging and pre-charging control.

In the present application, by highly integrating the MCU, VCU, PDU and BMS into a single circuit board structure, the space occupied by the first control unit 210 in the first housing 110 can be significantly reduced to make the first housing 110 small and compact in structure, thereby enhancing the integration level of the electric control assembly 10.

In some embodiments, the second control unit 220 includes an on-board charger and a DC-DC converter, both of which are provided on the side of the first base plate 112 facing the plug-in portion 122.

In the present application, as shown in FIGS. 15, 16 and 19, the second control unit 220 integrates the on-board charger (On-Board Charger, OBC) and the DC-DC converter (DC-DC Converter, DC-DC) into one unit and is disposed on the side of the first base plate 112 facing the plug-in portion 122. Corresponding, the first base 112 is provided with an assembly hole for mounting the second control unit 220, so that the second control unit 220 is fastened into the second housing 120 by a fastener. Among them, the OBC converts the alternating current input from the power grid to direct current to perform charging management on the vehicle's power battery, and the DC-DC converts a high-voltage direct current from the vehicle battery into a low-voltage direct current to supply power to the on-board power supply and a functional module on its electrical circuit.

In some embodiments, the first housing 110 further includes a top plate 114. The top plate is covered on the first enclosure portion 111, and a mounting seat 1111 is provided on the first enclosure portion 111. The mounting seat 1111 is arranged in a one-to-one correspondence with the mounting holes on the motor 20 and the reducer 30, so that the mounting seat 1111 can be connected to the mounting holes via fasteners.

As shown in FIGS. 14 and 16, the first housing 110 further includes the top plate 114. Specifically, the top plate 114 is a structure matching the first enclosure portion 111, and is covered on the first enclosure portion 111 to enclose the interior of the first housing 110, thereby enhancing the protection for the first control unit 210 in the first housing 110. In addition, the mounting seat 1111 is provided on the peripheral side of the first enclosure portion 111, and is in one-to-one correspondence with the mounting holes on the housings of the motor 20 and the reducer 30. The mounting seat 1111 is fixedly connected to the mounting holes via fasteners, where the fasteners may be bolts, studs or the like, and are not limited in the embodiments of the present application. Thus, the first housing 110 is firmly connected to the motor 20 and the reducer 30.

On basis of the above embodiments, this embodiment provides a vehicle, including an electric drive system and any above-mentioned electric control assembly 10 connected to the electric drive system.

The structure of the electric control assembly 10 is described in detail in the above embodiments and will not be elaborated here.

The vehicle provided in the present application is configured with the electric control assembly 10 in a stepped structure, which reduces the stacking height when a motor 20 and a reducer 30 of the electric drive system are disposed below the electric control assembly 10. A series cooling channel is arranged for the electric control assembly 10 and the electric drive system, which reduces the space occupied by a cooling assembly 300 in the electric control assembly 10 and the electric drive system, thus making the overall structure of the vehicle compact and high integration level. In actual operation, the electric control assembly 10 is electrically connected to the electric drive system, and the reducer 30 reduces the output rotational speed of the motor 20 through the active operation of integrated circuits between control units to increase output torque, thereby enabling the motor 20 to generate a driving force meeting the driving requirements of the vehicle.

### Embodiment 4

A drive motor controller, as the main control device in a drive motor system, mainly functions to convert, through an inverter module in a motor controller, a direct current from a power battery into a three-phase alternating current for use in a drive motor.

At present, a motor controller internally integrates a control board, a drive board, an IGBT module, a buffer capacitor, a discharge resistor and other components. The control board is mainly arranged with a low-voltage part of the motor controller, and with the main control chip of the motor controller as the core, a CAN communication circuit, a low-voltage input filter circuit, a protection circuit, a main control part power supply, a drive circuit power supply, a resolver decoding circuit, a temperature sampling circuit, an overcurrent and short-circuit protection circuit, an overvoltage protection circuit and other circuits are arranged respectively. A drive circuit, a current sampling circuit, a bus voltage sampling circuit, an IGBT protection circuit (overtemperature, overcurrent, short-circuit, undervoltage or overvoltage protection) and other circuits are mainly arranged on the drive board, and an IGBT module is arranged directly below the drive board.

However, a chip on a main control board of such a traditional motor controller is only equipped with a main control module, resulting in low integration level and slow communication speed.

To address this issue, the present application provides an electric drive assembly and a vehicle. By arranging two overlapping accommodating cavities on a housing, a first electrical assembly is disposed in a first accommodating cavity and a charging control unit is disposed in a second accommodating cavity, which facilitates the replacement and disassembly of the charging control unit. A nine-in-one integrated design is adopted for the motor controller, namely, integrating a vehicle control unit, a motor control unit, a high-voltage battery management unit, a low-voltage battery management unit, a high-voltage power distribution unit and the like into a single unit, and furthermore, the vehicle control unit, the motor control unit, the high-voltage battery management unit and the low-voltage battery management unit are integrated into a single chip. Compared with the motor controller of the traditional electric drive assembly, such a device of the present application features higher integration level and a faster internal communication speed of the controller.

T electric drive assembly in this embodiment is further described below.

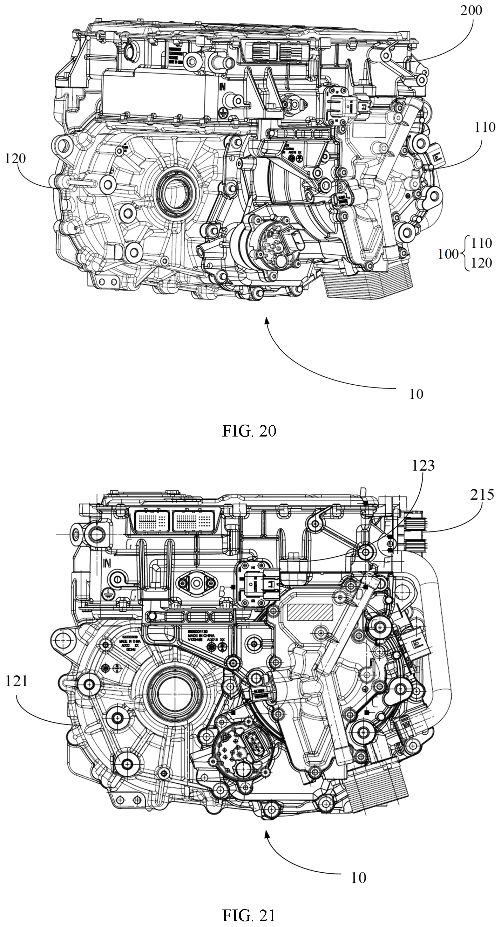

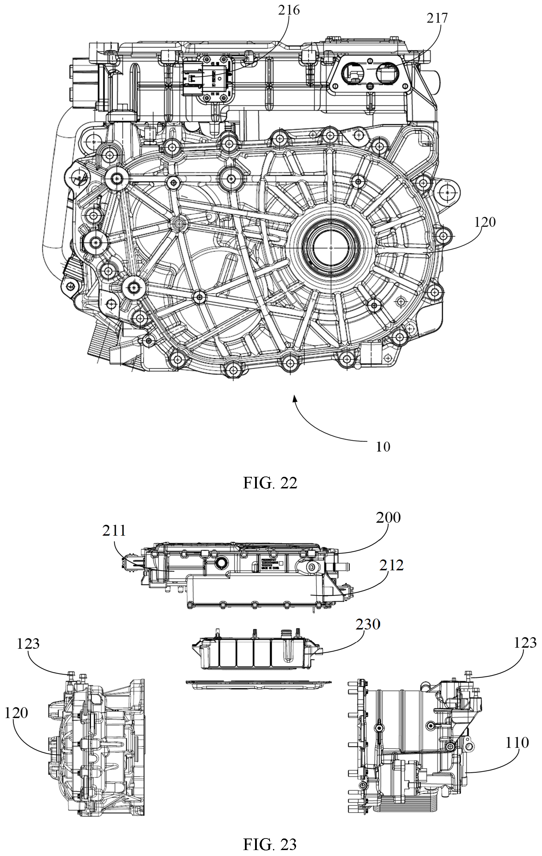

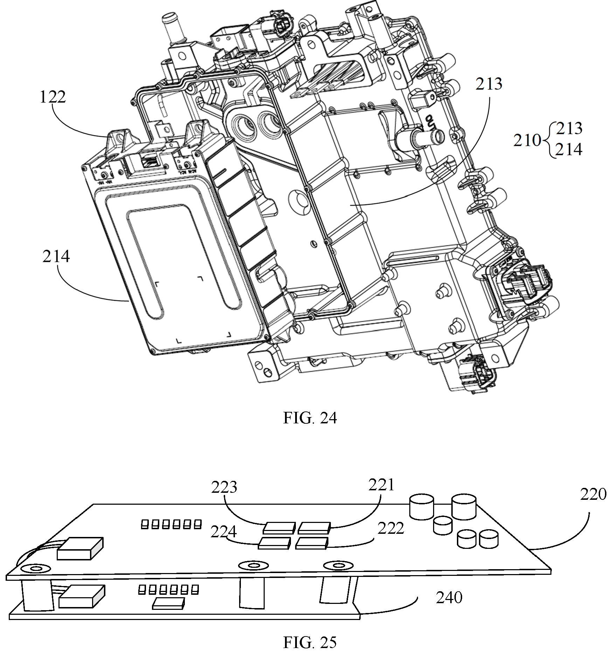

FIG. 20 is a schematic structural diagram of an electric drive assembly provided by an embodiment of the present application. FIG. 21 is a schematic structural diagram of an electric drive assembly from one perspective provided by an embodiment of the present application. FIG. 22 is a schematic structural diagram of an electric drive assembly from another perspective provided by an embodiment of the present application. FIG. 23 is an exploded diagram of an electric drive assembly provided by an embodiment of the present application. FIG. 24 is a schematic structural diagram of a motor control module in an electric drive assembly provided by an embodiment of the present application. FIG. 25 is a schematic diagram of a motor control module of an electric drive assembly provided by an embodiment of the present application.

As shown in FIGS. 20 and 21, the present embodiment provides an electric drive assembly 10. It can be seen from FIG. 20 that the electric drive assembly 10 includes a power module 100 and a motor control module 200, where the motor control module 200 includes a housing 210, a first electrical assembly and a second electrical assembly. The housing 210 and the power module 100 are sequentially connected in a first direction, and the housing 210 has a first accommodating cavity 211 and a second accommodating cavity 212 that are in communication with each other. The first accommodating cavity 211 and the second accommodating cavity 212 are arranged in a stacked manner along the first direction. The first electrical assembly is disposed in the first accommodating cavity 211, and the first electrical assembly includes a main control board 220 and a drive board 240, where a vehicle control unit 221, a motor control unit 222, a high-voltage battery management unit 223 and a low-voltage battery management unit 224 are arranged on the main control board 220. The second electrical assembly is disposed in the second accommodating cavity 212, the second electrical assembly includes a charging control unit 230, and the second electrical assembly is connected to the first electrical assembly via a plug-in wiring harness.

By arranging two overlapping accommodating cavities on the housing 210, the first electrical assembly being disposed in the first accommodating cavity 211 and the charging control unit 230 being disposed in the second accommodating cavity 212, this facilitates the replacement and disassembly of the charging control unit 230. A motor controller with a nine-in-one integrated design is adopted, namely, integrating a vehicle control unit 221, a motor control unit 222, a high-voltage battery management unit 223, a low-voltage battery management unit 224, a high-voltage power distribution unit and other components into a single unit, and furthermore, the vehicle control unit 221, the motor control unit 222, the high-voltage battery management unit 223 and the low-voltage battery management unit 224 are integrated onto a single chip. Compared with the motor controller in the traditional electric drive assembly, such a device of the present application features higher integration level and a faster internal communication speed of the motor controller.

In some embodiments, the housing 210 includes a first housing 213 and a second housing 214, where the first housing 213 is connected to the power module 100, and the second housing 214 and the first housing 213 are integrally formed. The first accommodating cavity 211 is provided in the first housing 213, and the second accommodating cavity 212 is provided in the second housing 214.

As shown in FIG. 24, the second housing 214 is located beneath the first housing 213, which effectively reduces the volume of the housing 210 and increases the degree of integration.

A mounting hole is formed in the bottom of the second housing 214, and a spring clip is disposed inside the mounting hole. A boss matching a groove is provided on the upper surface of the charging control unit 230, and the charging control unit 230 is detachably connected to the second housing 214 via the boss. This arrangement facilitates disassembly and assembly, as well as subsequent inspection, maintenance and replacement.

In some embodiments, an opening is formed at the bottom of the first accommodating cavity 211, and the second housing 214 is disposed in the first accommodating cavity 211 through the opening.

As shown in FIG. 23, the shape of the opening is the same as that of the charging control unit 230, and the size of the opening is slightly larger than that of the charging control unit 230. The purpose of this design is to provide a sufficient margin to place the charging control unit 230 inside the first accommodating cavity 211.

In some embodiments, a fast charging interface 215 and a slow charging interface 216 are provided on the housing 210, the fast charging interface 215 is configured for connecting to a high-voltage battery, and the slow charging interface 216 is electrically connected to the charging control unit 230.

Optionally, the charging mode of the vehicle is divided into fast charging and slow charging. This embodiment has both fast charging and slow charging functions. Therefore, the user can adopt different charging modes to charge the power battery according to the actual situation, which can bring better convenience to the user, solve the limitations of vehicle charging, and have a better driving experience.

Specifically, during fast charging, the direct current charging interface of a charging pile is connected to the fast charging interface 215 of the entire vehicle, the charging pile sends a charging wake-up signal to a high-voltage battery management unit 223, and the high-voltage battery management unit 223 sends a charging current instruction to the charging pile based on the rechargeable power of the power battery. Meanwhile, the high-voltage battery management unit 223 engages a high-voltage positive relay and a high-voltage negative relay of the system, and the power battery starts charging.

In some embodiments, the charging control unit 230 includes an on-board charger and a DC-DC converter. When the slow charging interface 216 is connected to the on-board charger, the on-board charger is configured to charge the power battery.

During slow charging, when the vehicle is in an alternating current charging mode, the on-board charger detects an alternating current charging interface signal and wakes up the high-voltage battery management unit 223, the high-voltage battery management unit 223 wakes up the on-board charger and sends an instruction for charging and meanwhile it closes a main relay, and the power battery starts charging.

The DC-DC converter converts a high-voltage direct current of the power battery into a low-voltage direct current, part of which is configured to supply power to low-voltage electrical equipment of the entire vehicle, and the other part of which is configured to charge a storage battery. Specifically, the on-board charger and the DC-DC converter may be separate and respectively provided in the housing 210, or integrated into one unit and disposed in the housing. In this embodiment, the on-board charger and the DC-DC converter are integrated into one unit, which helps to reduce the space occupancy rate.

In some embodiments, the first housing 213 and the second housing 214 are each provided with a plug-in interface, where the plug-in interface is threaded connection interface or a quick connection interface.

As shown in FIGS. 21 and 22, the fast charging interface 215, the slow charging interface 216, and a direct current bus screw interface 217 are provided on the housing, and they are connected by a threaded connection. A liquid cooling pipeline is provided inside the housing 210. Specifically, a quick-connect mode is adopted for the liquid cooling pipeline. This arrangement is because the liquid cooling pipeline is in a harsh working environment, while quick-connect joints feature high durability and reliability.

In some embodiments, the electric drive assembly 10 further includes a liquid cooling assembly, which is disposed on the housing 210 and provided with a liquid cooling pipeline and a pipe. The drive board 240 is thermally connected to the liquid cooling pipeline, so that the liquid cooling pipeline dissipates heat for the drive board 240.

As shown in FIG. 25, a drive board 240 and the main control board 220 are each provided with an interaction module, and the plug-in wiring harness connects the drive board 240 to the main control board 220 through the interaction module. Specifically, an IGBT module is disposed at the bottom of the drive board 240, with its input end connected to the bus capacitor and its output end connected to the three-phase busbar of the drive motor 110, for converting the direct current of the power battery into alternating current.

The housing 210 is provided with an inlet and an outlet, and the coolant flows into the liquid cooling pipeline and a pipe through the inlet. Portions of the liquid cooling pipeline and the pipe are disposed inside the housing 210, and another portion thereof is disposed outside the housing 210. Specifically, the IGBT module is in contact with the liquid cooling pipeline to dissipate heat from the drive board 240. The drive motor 110 and the reducer 120 share a single lubrication pipeline, which reduces the flow resistance of the cooling liquid and improves the heat dissipation efficiency.

In some embodiments, the power module 100 includes a drive motor 110, a drive motor housing, the reducer 120 and a reducer housing 121. The drive motor 110 and the reducer 120 are respectively mounted on the drive motor housing and the reducer housing 121, an output shaft of the drive motor 110 is connected to the reducer 120, and the housing 210 is arranged on the reducer housing 121.

The drive motor 110 includes a front end cover, around the circumference of which mounting holes are formed. Bolts pass through the mounting holes to connect the reducer 120 to the drive motor 110. Specifically, the motor control module 200 is connected to the three-phase busbar of the drive motor 110 via a plug-in member, to convert the direct current of the power battery into alternating current for the operation of the drive motor 110.

In some embodiments, a bracket 122 is provided on the housing 210, a mounting portion 123 is formed on the reducer housing 121, and the mounting portion 123 is connected to the bracket 122, as shown in FIGS. 23 and 24.

A threaded hole is provided in the mounting portion 123, a bolt passes through the threaded hole to install the reducer 120 and the drive motor 110 onto the housing 210. This design is intended to facilitate subsequent disassembly and replacement. Specifically, the drive motor 110 and the reducer 120 are also connected by a threaded connection.

In some embodiments, a vehicle includes the aforementioned electric drive assembly 10. The vehicle may be a car or a commercial vehicle, which is not limited in this embodiment.

Specifically, a drive chip is set on the drive board 240, and it controls the conduction or cut-off of the IGBT module. Meanwhile, the drive board 240 is controlled by the main control board 220, the main control chip receives two signals from the drive motor 110 and the vehicle control unit 221, for calculation, and the drive motor 110 sends signals of current value, signals of temperature sensor and signals of resolver to the main control board 220 through a plug-in member.

It should be supplemented that a first circuit board also includes a high-voltage power distribution unit, which distributes the high voltage electricity of the power battery to high-voltage electrical equipment such as the motor control unit 222, the drive motor 110, and the DC-DC converter, and meanwhile distributes the current from the fast charging interface 215 and the slow charging interface 216 to the power battery for charging the power battery.

It should be supplemented that the main control board 220 also has a controller local area network interface for coordinating data exchange between data networks with different structures and features. The main control chip on the main control board 220 integrates four modules: the vehicle control unit 221, the motor control unit 222, the high-voltage battery management unit 223, and the low-voltage battery management unit 224, which can shorten the communication path of each module and improve the communication speed.

In this embodiment, an electric drive assembly 10 includes a power module 100 and a motor control module 200, where the motor control module 200 includes a housing 210, a first electrical assembly and a second electrical assembly. The housing 210 and the power module 100 are sequentially connected in a first direction, and the housing 210 has a first accommodating cavity 211 and a second accommodating cavity 212 that are in communication with each other. The first accommodating cavity 211 and the second accommodating cavity 212 are arranged in a stacked manner along the first direction. The first electrical assembly is disposed in the first accommodating cavity 211 and includes a main control board 220, on which a vehicle control unit 221, a motor control unit 222, a high-voltage battery management unit 223 and a low-voltage battery management unit 224 are arranged. The second electrical assembly is disposed in the second accommodating cavity 212 and includes a charging control unit 230, and the second electrical assembly is connected to the first electrical assembly via a plug-in wiring harness. In this way, two overlapping accommodating cavities are arranged on the housing 210, the first electrical assembly is placed in the first accommodating cavity 211 and the charging control unit 230 is placed in the second accommodating cavity 212, which facilitates the replacement and disassembly of the charging control unit 230; a motor controller with a nine-in-one integrated design is adopted, namely, integrating the vehicle control unit 221, the motor control unit 222, the high-voltage battery management unit 223, the low-voltage battery management unit 224, the high-voltage power distribution unit and other components into a single unit, and the vehicle control unit 221, the motor control unit 222, the high-voltage battery management unit 223 and the low-voltage battery management unit 224 are integrated onto a single chip. Compared with the motor controller in the traditional electric drive assembly, such as device has a higher integration level and the motor controller features a faster internal communication speed.

The examples or embodiments in this specification are described in a progressive manner. Each example focuses on the differences from the others, and the same and similar parts can be referred to each other.

In the description of this specification, the reference terms "one embodiment", "some embodiments", "illustrative embodiments", "examples", "specific examples", or "some examples", etc., imply that the specific features, structures, materials or characteristics described in combination with the embodiments or examples are included in at least one embodiment or example of the present application. In this specification, indicative expressions of the above terms do not necessarily refer to the same embodiments or examples. Moreover, the specific features, structures, materials or characteristics described may be combined in an appropriate manner in any one or more embodiments or examples.

Finally, it should be noted that the above embodiments are used only to illustrate the technical solutions of the present application and not to limit them. Although the present application has been described in detail with reference to the aforementioned embodiments, it should be understood by those skilled in the art that it is still possible to modify the technical solutions described in the aforementioned embodiments or to make equivalent substitutions of some or all of their technical features. And such modifications or substitutions do not deviate the essence of the corresponding technical solutions from the scope of the technical solutions of the embodiments of the present application.

## Claims

1. A powertrain, **characterized by** comprising a motor, a reducer and a controller, wherein the motor and the reducer are each electrically connected to the controller;
the controller comprises a controller housing, and a first control module and a second control module that are arranged within the controller housing; the first control module comprises a vehicle control unit, a motor control unit, a high voltage battery management unit and a low voltage battery management unit; the second control module comprises a charging control unit;
the controller housing is provided with a first opening and a second opening, and the controller housing is further provided with a first cover and a second cover, the first cover is configured to openably cover the first opening, and the second cover is configured to openably cover the second opening, wherein the first opening is opposite to the first control module, and the second opening is opposite to the second control module.

2. The powertrain according to claim 1, wherein the first opening and the second opening are located on two opposite side walls of the controller housing, respectively.

3. The powertrain according to claim 2, wherein the controller housing is provided with a partition plate, the partition plate is configured to divide an inner cavity of the controller housing into two parts, and the first control module and the second control module are respectively located in cavities at both sides of the partition plate.

4. The powertrain according to any one of claims 1-3, wherein
the motor comprises a motor housing and a motor body disposed within the motor housing;
the reducer comprises a reducer housing and a gear assembly disposed within the reducer housing, the reducer housing is connected to the motor housing, the gear assembly is connected to an output shaft of the motor body, the gear assembly comprises a plurality of gears, the plurality of gears are arranged along a first direction, the first direction is perpendicular to the output shaft of the motor body, the motor housing and the reducer housing form an included angle area;
the controller is located on a side of the motor housing along a circumferential direction of the output shaft of the motor body, and at least one of the motor housing and the reducer housing is connected to the controller housing.

5. The powertrain according to claim 4, wherein at least part of the controller housing protrudes into the included angle area, so that the second control module and the second cover are both within the included angle area.

6. The powertrain according to claim 4, wherein the powertrain further comprises a cooling unit, the cooling unit is provided with a cooling pipeline for flow of a cooling fluid;
the cooling pipeline comprises a first cooling section and a second cooling section, the first cooling section is configured for heat exchange with the first control module, the second cooling section is configured for heat exchange with the second control module, wherein the first cooling section is in communication with the second cooling section.

7. The powertrain according to claim 6, wherein
the reducer housing is provided with a first through hole and a second through hole, both the first through hole and the second through hole are in communication with inner and outer sides of the reducer housing, and both the first through hole and the second through hole are in communication with an inner cavity of the motor housing; a height of the first through hole is greater than a height of the second through hole.

8. The powertrain according to claim 7, wherein the powertrain further comprises an oil pump and a heat exchanger, the heat exchanger comprises a first chamber and a second chamber that are separated from each other, one end of the oil pump is in communication with the inner cavity of the motor housing, the other end of the oil pump is in communication with a first end of the first chamber, a second end of the first chamber is respectively in communication with the reducer housing and the motor housing; and the second chamber is in communication with the cooling pipeline.

9. The powertrain according to any one of claims 1-3, wherein the charging control unit comprises an on-board charger and a direct current-direct current converter.

10. The powertrain according to claim 1, further comprising an on-board charger applied in a vehicle controller, the on-board charger comprising a base plate and a charger body, wherein
the charger body is located on the base plate and is detachably connected to the base plate;
the base plate has mounting holes, the mounting holes are used to connect to the vehicle controller, so that the on-board charger is detachably connected to the vehicle controller via the mounting holes.

11. The powertrain according to claim 10, further comprising a cooling pipeline, the cooling pipeline being located on the base plate and connected to the base plate, wherein
the cooling pipeline contains a coolant, and the charger body is distributed around the cooling pipeline.

12. The powertrain according to claim 11, wherein the cooling pipeline encloses to form a first accommodating groove;
the first accommodating groove contains a first thermal conductive adhesive, and at least part of the charger body is embedded in the first thermal conductive adhesive.

13. The powertrain according to claim 11 or 12, further comprising a first barrier, the first barrier being located on the base plate, wherein
the first barrier encloses to form a second accommodating groove, the second accommodating groove contains a second thermal conductive adhesive, and at least part of one end of the charger body extends into the second thermal conductive adhesive.

14. The powertrain according to claim 13, further comprising a second barrier, the second barrier being located on the base plate, and the cooling pipeline being located between the second barrier and the first barrier, wherein
the second barrier encloses to form a third accommodating groove, the third accommodating groove contains a third thermal conductive adhesive, and at least part of one end of the charger body extends into the third thermal conductive adhesive.

15. The powertrain according to claim 12, further comprising a plurality of first connecting columns, wherein the plurality of first connecting columns are distributed on both sides of the first accommodating groove, and the first connecting columns are located at an edge of the base plate;
the first connecting columns are provided with first connecting holes, and the charger body is connected to the first connecting columns through the first connecting holes.

16. The powertrain according to claim 15, further comprising a second connecting column, wherein the second connecting column is provided around an outer periphery of the cooling pipeline and connected to the cooling pipeline;
the second connecting column is provided with a second connecting hole, and the charger body is connected to the second connecting column through the second connecting hole.

17. The powertrain according to claim 11 or 12, further comprising an inlet and an outlet, wherein
the inlet and the outlet are located on a side of the base plate facing away from the cooling pipeline, and the inlet and outlet are in communication with the cooling pipeline.

18. The powertrain according to claim 1, further comprising an electric control assembly applied in an electric drive system; the electric control assembly comprising a housing assembly, a control assembly and a cooling assembly, wherein
the housing assembly comprises a first housing and a second housing, the first housing is configured to connect with a motor and a reducer of the electric drive system, and the second housing is connected below part of the first housing;
the control assembly comprises a first control unit and a second control unit, the first control unit is disposed within the first housing, and the second control unit is disposed within the second housing;
the cooling assembly comprises a first cooling unit and a second cooling unit, the first cooling unit is disposed between the first housing and the second housing, the second cooling unit is disposed on the motor, and the first cooling unit is in communication with the second cooling unit to cool the control assembly, the motor, and the reducer.

19. The powertrain according to claim 18, wherein the first housing comprises a first enclosure portion, a first base plate and a second base plate, the first base plate is connected to the second base plate, the first enclosure portion is arranged around the first base plate and the second base plate, and the second housing is located below the first base plate.

20. The powertrain according to claim 19, wherein the second housing comprises a second enclosure portion and a plug-in portion, the second enclosure portion is arranged around a lower side of the first base plate facing away from the first enclosure portion, and the plug-in portion is plugged onto the second enclosure portion.

21. The powertrain according to claim 19, wherein the first cooling unit comprises a first cooling member, the first cooling member is disposed on the first base plate and has a cooling water channel inlet and a cooling water channel outlet that are in communication with each other.

22. The powertrain according to claim 21, wherein the first cooling unit further comprises at least one liquid inlet and at least one liquid outlet, the liquid inlet is disposed on a side of the first enclosure portion facing the first base plate, and the liquid outlet is disposed on a side of the second base plate; the liquid inlet is in communication with the cooling water channel inlet, and the liquid outlet is in communication with the cooling water channel outlet.

23. The powertrain according to claim 22, wherein the second cooling unit comprises a second cooling member and a connecting member, the second cooling member is configured to be disposed at a bottom end of a motor housing, and the second cooling member is in communication with the liquid outlet via the connecting member.

24. The powertrain according to any one of claims 18-23, wherein the first control unit comprises a motor controller, the motor controller is provided in the first housing.

25. The powertrain according to claim 20, wherein the second control unit comprises an on-board charger and a direct current-direct current converter, both the on-board charger and the direct current-direct current converter are provided on a side of the first base plate facing the plug-in portion.

26. The powertrain according to any one of claims 19-23, wherein the first housing further comprises a top plate, the top plate is covered on the first enclosure portion, and a mounting seat is provided on the first enclosure portion, the mounting seat is arranged in a one-to-one correspondence with mounting holes on the motor and the reducer, so that the mounting seat is connected to the mounting holes via fasteners.

27. The powertrain according to claim 1, further comprising an electric drive assembly, the electric drive assembly comprising a power module and a motor control module, wherein the motor control module comprises a housing, a first electrical assembly and a second electrical assembly;
the housing and the power module are sequentially connected in a first direction, and the housing has a first accommodating cavity and a second accommodating cavity that are in communication with each other, the first accommodating cavity and the second accommodating cavity are arranged in a stacked manner along the first direction;
the first electrical assembly is disposed in the first accommodating cavity, and the first electrical assembly comprises a main control board and a drive board, the main control board is provided with a vehicle control unit, a motor control unit, a high-voltage battery management unit and a low-voltage battery management unit; the second electrical assembly is disposed in the second accommodating cavity, the second electrical assembly comprises a charging control unit, and the second electrical assembly is connected to the first electrical assembly via a plug-in wiring harness.

28. The powertrain according to claim 27, wherein the housing comprises a first housing and a second housing, wherein the first housing is connected to the power module, and the second housing and the first housing are integrally formed, the first accommodating cavity is provided in the first housing, and the second accommodating cavity is provided in the second housing.

29. The powertrain according to claim 28, wherein an opening is formed at a lower part of the first accommodating cavity, and the second housing is disposed in the first accommodating cavity through the opening.

30. The powertrain according to claim 27, wherein a fast charging interface and a slow charging interface are provided on the housing, the fast charging interface is configured to connect to a high-voltage battery, and the slow charging interface is electrically connected to the charging control unit.

31. The powertrain according to claim 30, wherein the charging control unit comprises an on-board charger and a direct current-direct current converter, the slow charging interface is connected to the on-board charger, and the on-board charger is configured to charge a power battery.

32. The powertrain according to claim 28, wherein the first housing and the second housing are each provided with a plug-in interface, wherein the plug-in interface is a threaded connection interface or a quick connection interface.

33. The powertrain according to any one of claims 27-30, wherein the electric drive assembly further comprises a liquid cooling assembly, the liquid cooling assembly is disposed on the housing and has a liquid cooling pipeline and a pipe, the drive board is thermally connected to the liquid cooling pipeline, so that the liquid cooling pipeline dissipates heat for the drive board.

34. The powertrain according to any one of claims 27-30, wherein the power module comprises a drive motor, a drive motor housing, a reducer and a reducer housing, the drive motor and the reducer are respectively mounted on the drive motor housing and the reducer housing, an output shaft of the drive motor is connected to the reducer, and the housing is arranged on the reducer housing.

35. The powertrain according to claim 34, wherein a bracket is provided on the housing, a mounting portion is provided on the reducer housing, and the mounting portion is connected to the bracket.

36. A vehicle controller, **characterized by** comprising a housing and the powertrain according to any one of claims 10-17, wherein the powertrain comprises an on-board charger;
the on-board charger is located inside the housing and is detachably connected to a bottom wall of the housing.

37. A vehicle, **characterized by** comprising the powertrain according to any one of claims 1-9; and/or
the vehicle controller according to claim 36; and/or
an electric drive system and the powertrain according to any one of claims 18-26 connected to the electric drive system; and/or
the powertrain according to any one of claims 27-35.
